(19) Europäisches Patentamt / European Patent Office / Office européen des brevets

(11) **EP 3 299 763 B1**

(12) **EUROPEAN PATENT SPECIFICATION**

(45) Date of publication and mention of the grant of the patent:
**26.08.2020  Bulletin 2020/35**

(21) Application number: **15892635.2**

(22) Date of filing: **25.12.2015**

(51) Int Cl.:
*G06T 1/00* *(2006.01)*          *G06K 9/00* *(2006.01)*
*G01S 17/89* *(2020.01)*        *G01C 21/36* *(2006.01)*
*G01S 7/48* *(2006.01)*

(86) International application number:
**PCT/JP2015/086323**

(87) International publication number:
**WO 2016/185637 (24.11.2016 Gazette 2016/47)**

(54) **POINT CLOUD IMAGE GENERATOR**

PUNKTWOLKENBILDGENERATOR

GENERATEUR D'IMAGE DE NUAGE DE POINTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **20.05.2015   JP 2015103240**
                **20.05.2015   JP 2015103152**

(43) Date of publication of application:
**28.03.2018   Bulletin 2018/13**

(73) Proprietor: **Mitsubishi Electric Corporation**
**Chiyoda-ku**
**Tokyo 100-8310 (JP)**

(72) Inventors:
• **TOGASHI, Kenji**
  **Tokyo 100-8310 (JP)**

• **OZAWA, Tadashi**
  **Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**WO-A1-2015/053040       JP-A- 2003 153 248**
**JP-A- 2005 321 370       JP-A- 2010 249 709**
**JP-A- 2015 031 018       US-A1- 2015 084 755**

• **'UC-win/Road Tengun Modeling' 21 September 2010, XP055465811 Retrieved from the Internet: <URL:http: //www.forum8.co.jp/product/ucwin/road/road-tengun.htm> [retrieved on 2016-03-17]**

**Description**

Technical Field

The present invention relates to a feature measurement system for acquiring three-dimensional point cloud data representing a three-dimensional shape of a surrounding feature while traveling on a road or the like, and more particularly to a technique for generating a point cloud image of the feature represented by the three-dimensional point cloud data being acquired.

Background Art

In the field of surveying, a mobile mapping system (MMS) is becoming widespread as a system that acquires three-dimensional information of a feature while on the move.

The MMS can perform high precision measurement in an environment with a visible GPS satellite. Moreover, the use of positioning reinforcement information enables generation of high-precision three-dimensional point cloud data during travel and display of a three-dimensional point cloud in real time. The GPS is an abbreviation for global positioning system.

List of Citations

Patent Literature

Patent Literature 1: WO 2008/099915 A
Patent Literature 2: JP 2015-31018 A

Document US2015/0084755 discloses a driver assistance system configured to display on a vehicle display an image of corresponding surroundings of the vehicle.

Summary of the Invention

Technical Problem

An object of the present invention is to provide a point cloud image generator for displaying a point cloud image of a feature acquired at a measurement point in a desired mode in a system capable of displaying, in real time, a point cloud image of a feature acquired during travel.

Solution to the Problem

A point cloud image generator according to the present invention is defined in independent claim 1.

Advantageous Effects of Invention

The present invention can provide the point cloud image generator for displaying a point cloud image of a feature acquired at a measurement point in a desired mode in the system capable of displaying, in real time, a point cloud image of a feature acquired during travel.

Brief Description of Drawings

FIG. 1      is a diagram illustrating the configuration of a point cloud image generator 100 according to a first embodiment.
FIG. 2      is an external view of a measuring vehicle 110 according to the first embodiment.
FIG. 3      is a diagram illustrating a display example on a display 300 according to the first embodiment.
FIG. 4      is an explanatory diagram of a viewpoint position according to the first embodiment.
FIG. 5      is a view illustrating the construction of a point cloud image 310 according to the first embodiment.
FIG. 6      is a diagram illustrating the construction of an interface image 320 according to the first embodiment.

FIG. 7 is a flowchart of a point cloud image generating method according to the first embodiment.

FIG. 8 is a set of views each illustrating the point cloud image 310 with a different gaze direction according the first embodiment.

FIG. 9 is a set of views each illustrating the point cloud image 310 with a different offset in an upward, downward, leftward, or rightward direction according to the first embodiment.

FIG. 10 is a set of views each illustrating the point cloud image 310 with a different offset in a frontward or backward direction according to the first embodiment.

FIG. 11 is a set of views each illustrating the point cloud image 310 with a different offset in an upward, downward, leftward, or rightward rotation according to the first embodiment.

FIG. 12 is a diagram illustrating the hardware configuration of the point cloud image generator 100 according to an embodiment.

FIG. 13 is a view illustrating an example of a measuring vehicle equipped with a display system according to a second embodiment.

FIG. 14 is a diagram illustrating the configuration of the display system according to the second embodiment.

FIG. 15 is a view illustrating a display screen on a display that displays a point cloud image in the display system according to the second embodiment.

FIG. 16 is a diagram illustrating a display example of a control unit that controls a viewpoint of the point cloud image in the display system according to the second embodiment.

FIG. 17 is a set of views each illustrating an example of a point cloud image switchably displayed by selection of five input buttons on the control unit according to the second embodiment.

FIG. 18 is a set of views each illustrating an example of a point cloud image displayed when a predetermined offset value is set in a horizontal or vertical direction with respect to a reference viewpoint position by an offset value setting part of the control unit according to the second embodiment.

FIG. 19 is a set of views each illustrating an example of a point cloud image displayed when a predetermined offset value is set frontward and backward with respect to the reference viewpoint position by the offset value setting part of the control unit according to the second embodiment.

FIG. 20 is a set of views each illustrating an example of a point cloud image displayed when an offset value of a predetermined angle is set in the horizontal or vertical direction with respect to a reference gaze direction by the offset value setting part of the control unit according to the second embodiment.

FIG. 21 is a diagram illustrating the configuration of a display system according to a third embodiment.

FIG. 22 is a set of explanatory diagrams of processing that generates reference three-dimensional point cloud data by a reference data generating part of a point cloud recognition processing unit in the display system according to the third embodiment.

FIG. 23 is a flowchart illustrating lattice point alignment processing performed by the reference data generating part and a difference processing part of the point cloud recognition processing unit in the display system according to the third embodiment.

FIG. 24 is a set of views illustrating a change in a point cloud image 310 according to <Example 1> of a fourth embodiment.

FIG. 25 is a set of views illustrating a change in a point cloud image 310 according to <Example 2 and 3> of the fourth embodiment.

FIG. 26 is a set of diagrams illustrating a viewpoint control mode switching button 314 according to a fifth embodiment.

FIG. 27 is a view illustrating a point cloud image 310 on which slides (315 and 316) are overlaid and displayed, according to the fifth embodiment.

FIG. 28 is a view illustrating a point cloud image 310 on which a viewpoint position mark 317 is overlaid and displayed, according to the fifth embodiment.

## Description of Embodiments

### First Embodiment

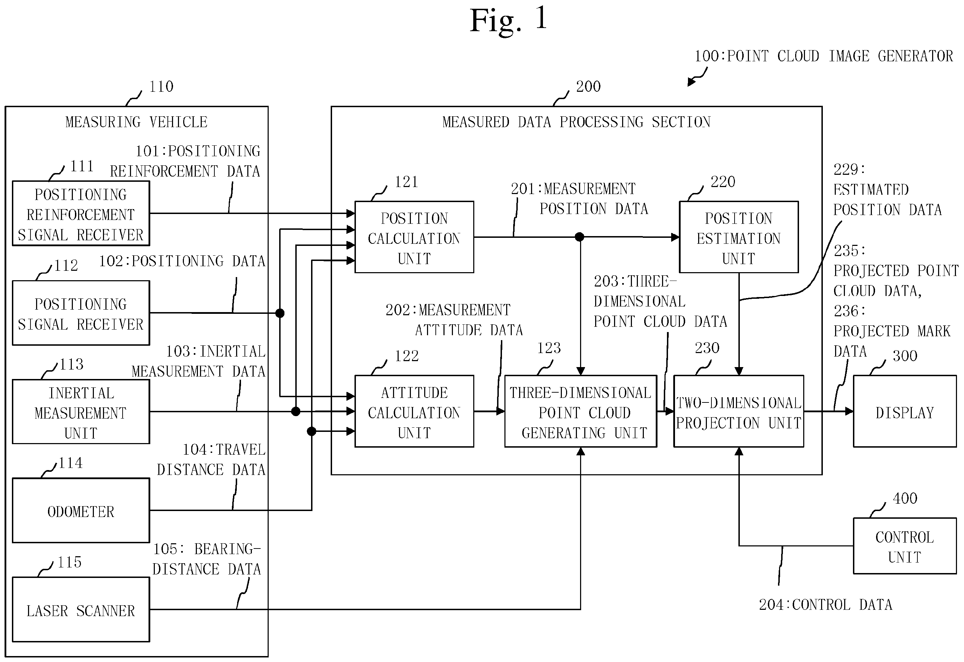

There will be described, with reference to FIGS. 1 to 12, a point cloud image generator 100 that acquires three-dimensional point cloud data representing a three-dimensional shape of a surrounding feature while traveling on a road or the like and displays, in real time, the three-dimensional shape of the feature represented by the three-dimensional point cloud data being acquired.

### Description of the Configuration

The configuration of the point cloud image generator 100 will be described with reference to FIG. 1.

The point cloud image generator 100 includes a measuring vehicle 110, a measured data processing section 200, a display 300, and a control unit 400.

The measuring vehicle 110 is a vehicle that performs various measurements while traveling on a road.

By the various measurements, positioning reinforcement data 101, positioning data 102, inertial measurement data 103, travel distance data 104, and bearing-distance data 105 are obtained.

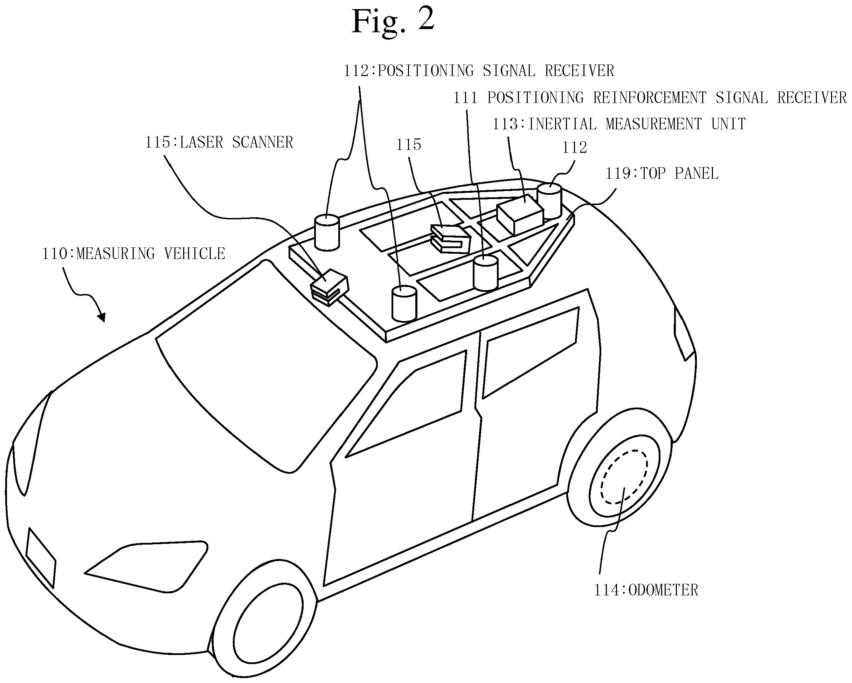

The configuration of the measuring vehicle 110 will be described with reference to FIG. 2.

The measuring vehicle 110 includes a top panel 119 provided on the roof of a vehicle body. The measuring vehicle 110 also includes an odometer 114.

Mounted on the top panel 119 are a positioning reinforcement signal receiver 111, a positioning signal receiver 112, an inertial measurement unit 113, and a laser scanner 115.

The positioning reinforcement signal receiver 111 receives the positioning reinforcement data 101 used to measure the position of the measuring vehicle 110 with high accuracy from a GNSS satellite, a ground-based wireless LAN, or a mobile phone line. The GNSS is an abbreviation for global navigation satellite system.

The positioning reinforcement data 101 can be distributed from a GNSS satellite or a GNSS correction information distribution service provider via a mobile telephone network.

In the case where the GNSS satellite is a quasi-zenith satellite distributing the positioning reinforcement data 101, the positioning reinforcement data 101 with centimeter accuracy is included in an L6 band signal transmitted from the quasi-zenith satellite. In this case, the positioning reinforcement data 101 represents an error with a satellite clock of a GPS satellite, an orbit error of the GPS satellite, an inter-frequency bias, an error with an ionospheric propagation delay, and an error with a tropospheric delay.

The positioning signal receiver 112 receives a positioning signal transmitted from a positioning satellite and measures the position of the measuring vehicle 110 by using the result of the positioning signal being received. An example of the positioning satellite is a GPS satellite.

The positioning data 102 is data representing the position of the measuring vehicle 110 measured by the positioning signal receiver 112.

The inertial measurement unit 113 includes a gyroscope that measures angles and angular velocities in three axial directions of the measuring vehicle 110, and an acceleration sensor that measures accelerations in the three axial directions of the measuring vehicle 110. The angles in the three axial directions of the measuring vehicle 110 are an angle of elevation, an angle of rotation, and an angle of bearing.

The inertial measurement data 103 is data representing information obtained by the inertial measurement unit 113.

The odometer 114 detects a vehicle speed pulse output each time a wheel of the measuring vehicle 110 rotates, and calculates a travel distance by integral calculation using a rolling radius of a tire and the rotation amount of the wheel.

The travel distance data 104 is data representing the travel distance calculated by the odometer 114.

The laser scanner 115 emits a laser while rotating at a speed of about 100 revolutions per second and scans a feature located around the measuring vehicle 110.

At that time, the laser scanner 115 measures a time difference between the time when the laser is emitted and the time when the laser reflected from the feature is received for each point (irradiation point) irradiated with the laser, and finds the distance to the point irradiated with the laser by using the time difference being measured. The laser scanner 115 also finds a bearing indicating the direction in which the laser is emitted.

The bearing-distance data 105 is data in which a measurement time, the distance, and the bearing are associated with one another. The measurement time is the time when the laser scanner 115 performs measurement. An example of the measurement time is the time when the laser is emitted or the time when the laser is received.

Returning back to FIG. 1, the description of the point cloud image generator 100 will be continued.

The measured data processing section 200 includes a position calculation unit 121, an attitude calculation unit 122, a three-dimensional point cloud generating unit 123, a position estimation unit 220, and a two-dimensional projection unit 230.

Using the positioning reinforcement data 101, the positioning data 102, the inertial measurement data 103, and the travel distance data 104, the position calculation unit 121 calculates a three-dimensional coordinate value of a measurement position that is the position of the measuring vehicle 110 at the measurement time. The measurement position is also called a self position or a vehicle position.

The position calculation unit 121 then generates measurement position data 201 representing the measurement position being calculated.

Using the positioning data 102, the inertial measurement data 103, and the travel distance data 104, the attitude calculation unit 122 calculates a measurement attitude that is the attitude of the measuring vehicle 110 (or the laser scanner 115) at the measurement time.

The attitude calculation unit 122 then generates measurement attitude data 202 representing the measurement attitude being calculated.

Using the bearing-distance data 105, the measurement position data 201, and the measurement attitude data 202, the three-dimensional point cloud generating unit 123 generates three-dimensional point cloud data 203 represented by a three-dimensional point cloud representing a feature measured by the laser scanner 115.

At this time, the three-dimensional point cloud generating unit 123 uses the measurement attitude represented by the measurement attitude data 202 to correct the bearing represented by the bearing-distance data 105, and uses the corrected bearing, the measurement position represented by the measurement position data 201, and the distance represented by the bearing-distance data 105 to calculate a three-dimensional coordinate value of a point irradiated with the laser.

The three-dimensional point cloud data 203 is data generated by using the bearing-distance data 105 that is obtained by measuring the bearing and distance to each of a plurality of laser irradiation points on a surrounding feature irradiated by laser from +-the laser scanner 115 mounted on the measuring vehicle 110, and is data representing the three-dimensional coordinate value of each of the plurality of laser irradiation points.

The position estimation unit 220 uses the measurement position data 201 representing the three-dimensional coordinate value at the measurement position, and estimates the three-dimensional coordinate value at an estimated position being the position of the measuring vehicle 110 when a point cloud image 310 is displayed. The estimated position is also called a current position or an estimated self position.

The position estimation unit 220 then generates estimated position data 229 representing the three-dimensional coordinate value being estimated.

Using the measurement position data 201, the measurement attitude data 202, the three-dimensional point cloud data 203, and the estimated position data 229, the two-dimensional projection unit 230 generates projected point cloud data 235 and projected mark data 236 according to information represented by control data 204 output from the control unit 400. Although not shown, the measurement position data 201 is input from the position calculation unit 121 to the two-dimensional projection unit 230, and the measurement attitude data 202 is input from the attitude calculation unit 122 to the two-dimensional projection unit 230.

The projected point cloud data 235 is data obtained by converting the three-dimensional point cloud data 203 into a two-dimensional coordinate value. The projected point cloud data 235 and projected mark data 236 being generated are output to the display 300.

Coordinate conversion processing (projection processing) performed by the two-dimensional projection unit 230 will be described later.

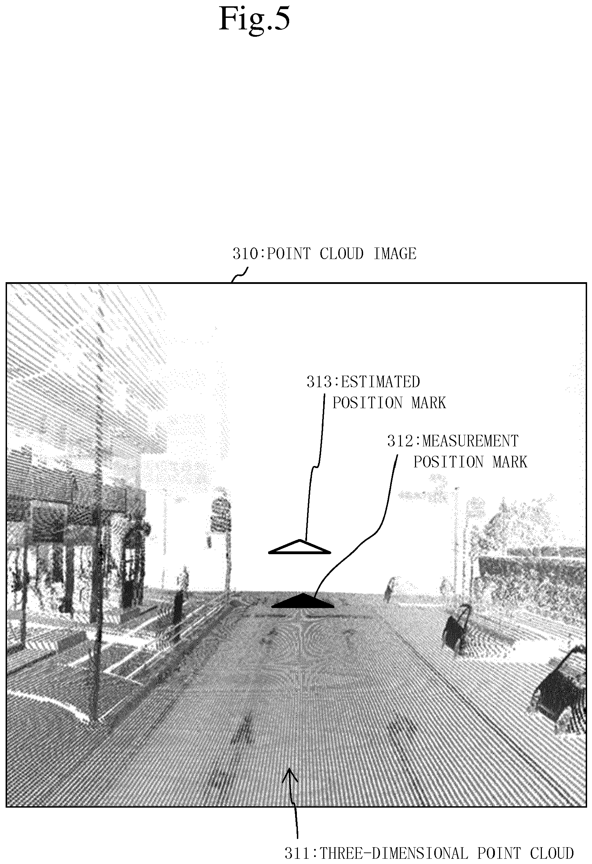

FIG. 5 is a view illustrating an example of the point cloud image 310 displayed on the display 300 on the basis of the projected point cloud data 235 and the projected mark data 236.

The point cloud image 310 includes a three-dimensional point cloud 311, a measurement position mark 312, and an estimated position mark 313.

The three-dimensional point cloud 311 represents a plurality of irradiation points obtained by irradiating a surrounding feature laser from by the laser scanner 115 mounted on the measuring vehicle 110, and is displayed on the basis of the three-dimensional point cloud data 203. Each point making up the three-dimensional point cloud 311 is represented by a triangle.

The measurement position mark 312 represents a measurement position that is the position of the measuring vehicle 110 when the measuring vehicle 110 acquires various measured data. The measurement position is also called the self position or the vehicle position.

The estimated position mark 313 represents an estimated position that is the position of the measuring vehicle 110 when the point cloud image 310 is displayed. The estimated position is also called the current position or the vehicle position.

The measurement position mark 312 and the estimated position mark 313 are displayed on the basis of the projected mark data 236.

Returning back to FIG. 1, the description of the point cloud image generator 100 will be continued.

The control unit 400 outputs the control data 204 representing a viewpoint position and a gaze direction specified by a user.

The control unit 400 is software or hardware that controls an interface image 320 or a user interface represented by the interface image 320.

The interface image 320 is an image representing the user interface used to change the viewpoint position and the gaze direction.

The user specifies the viewpoint position and the gaze direction by controlling the user interface represented by the interface image 320 with the use of an input unit such as a keyboard or a mouse. The user may also specify the viewpoint position and the gaze direction by using an input unit such as a touch pad or a touch panel.

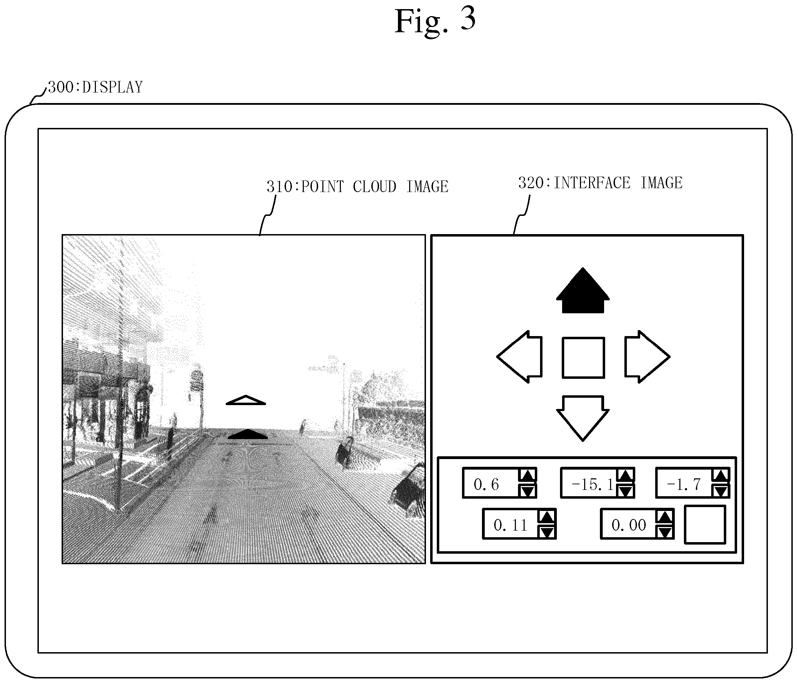

A display example of the display 300 will be described with reference to FIG. 3.

The display 300 displays the point cloud image 310 and the interface image 320 corresponding to the control unit 400. The display 300 may include a touch panel operated by a user.

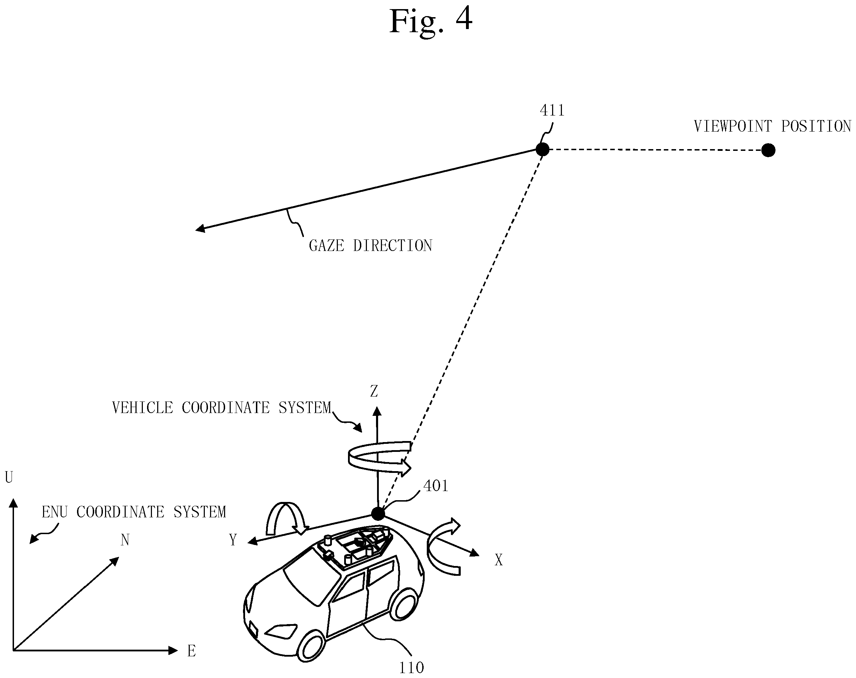

FIG. 4 is an explanatory diagram of the viewpoint position in the point cloud image 310 displayed on the display 300.

A reference viewpoint position 411 is set at a position that is a predetermined distance away from the position of the measuring vehicle 110 (a vehicle position 401). In the initial state, the point cloud image 310 of a feature is displayed, the feature being seen in the gaze direction from the reference viewpoint position 411 toward the direction of travel (forward) of the measuring vehicle 110. The reference viewpoint position 411 is also called a reference position or a viewpoint reference position.

The user can change the gaze direction from the reference viewpoint position 411 to a desired direction as well as set the viewpoint position with a predetermined offset value with respect to the reference viewpoint position 411 via the control unit 400.

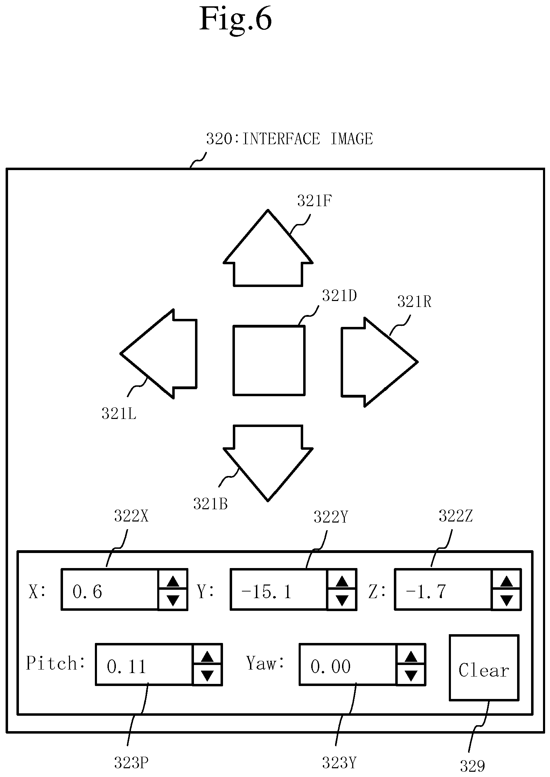

The construction of the interface image 320 will be described with reference to FIG. 6.

The interface image 320 includes a forward button 321F, a backward button 321B, a left button 321L, a right button 321R, and a downward button 321D.

The forward button 321F, the backward button 321B, the left button 321L, and the right button 321R are buttons each having the shape of an arrow, and the downward button 321D is a button having a square shape.

The forward button 321F is arranged above the downward button 321D, the backward button 321B is arranged below the downward button 321D, the left button 321L is arranged to the left of the downward button 321D, and the right button 321R is arranged to the right of the downward button 321D.

The forward button 321F is a button for directing the gaze direction toward the direction of travel of the measuring vehicle 110.

The backward button 321B is a button for directing the gaze direction toward a direction opposite to the direction of travel of the measuring vehicle 110.

The left button 321L is a button for directing the gaze direction toward the left with respect to the direction of travel of the measuring vehicle 110.

The right button 321R is a button for directing the gaze direction toward the right with respect to the direction of travel of the measuring vehicle 110.

The downward button 321D is a button for directing the gaze direction downward.

The interface image 320 includes a left-right widget 322X, a front-back widget 322Y, an up-down widget 322Z, an angle-of-elevation widget 323P, an angle-of-bearing widget 323Y, and a clear button 329.

The left-right widget 322X is a user interface for specifying the amount of shift of the viewpoint position in the lateral direction of the measuring vehicle 110 with respect to the reference viewpoint position 411.

The front-back widget 322Y is a user interface for specifying the amount of shift of the viewpoint position in the front-back direction of the measuring vehicle 110 with respect to the reference viewpoint position 411.

The up-down widget 322Z is a user interface for specifying the amount of shift of the viewpoint position in the vertical direction of the measuring vehicle 110 with respect to the reference viewpoint position 411.

The angle-of-elevation widget 323P is a user interface for setting an offset amount to shift the gaze direction from the reference viewpoint position 411 by a predetermined angle in the perpendicular direction.

The angle-of-bearing widget 323Y is a user interface for setting an offset amount to shift the gaze direction from the reference viewpoint position 411 by a predetermined angle in the horizontal direction.

The clear button 329 is a button for clearing the amount of shift being specified and the offset amount being specified.

The projection processing performed by the two-dimensional projection unit 230 will now be described.

The two-dimensional projection unit 230 calculates the reference viewpoint position 411 by using the measurement position data 201 and the measurement attitude data 202, and then finds the viewpoint position and a viewline direction specified by the user by using the reference viewpoint position 411 and the control data 204 from the control unit 400.

On the basis of the viewpoint position and the gaze direction specified by the user, the two-dimensional projection unit 230 performs two-dimensional projection processing of converting the three-dimensional point cloud data 203 into two-dimensional coordinate data, and generates the projected point cloud data 235.

Likewise, on the basis of the viewpoint position and the viewline direction specified by the user, the two-dimensional projection unit 230 performs two-dimensional projection processing of converting each of the measurement position data 201 and the estimated position data 229 into two-dimensional coordinate data, and generates the projected mark data 236.

Description of Operation

The operation of the point cloud image generator 100 corresponds to a point cloud image generating method. The point cloud image generating method corresponds to a procedure in a point cloud image generating program.

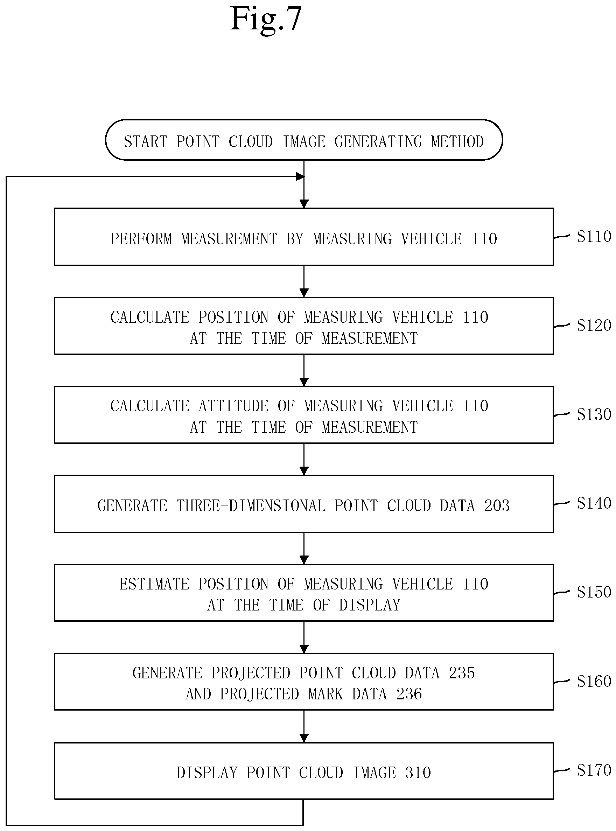

The point cloud image generating method will be described with reference to FIG. 7.

Measurement processing is performed in step S110.

In step S110, each device on the measuring vehicle 110 performs measurement and outputs data obtained by the measurement. The output data corresponds to the positioning reinforcement data 101, the positioning data 102, the inertial measurement data 103, the travel distance data 104, and the bearing-distance data 105.

Position calculation processing is performed in step S120.

In step S120, the position calculation unit 121 calculates a three-dimensional coordinate value of a measurement position by using the positioning reinforcement data 101, the positioning data 102, the inertial measurement data 103, and the travel distance data 104. The measurement position is the position of the measuring vehicle 110 at the time of measurement.

The position calculation unit 121 then generates the measurement position data 201 representing the three-dimensional coordinate value of the measurement position, and outputs the measurement position data 201 being generated.

Attitude calculation processing is performed in step S130.

In step S130, the attitude calculation unit 122 calculates a measurement attitude by using the positioning data 102, the inertial measurement data 103, and the travel distance data 104. The measurement attitude is the attitude of the measuring vehicle 110 at the time of measurement.

The attitude calculation unit 122 then generates the measurement attitude data 202 representing the measurement attitude, and outputs the measurement attitude data 202 being generated.

Three-dimensional point cloud generating processing is performed in step S140.

In step S140, the three-dimensional point cloud generating unit 123 calculates a three-dimensional coordinate value of each irradiation point irradiated with the laser by using the measurement position data 201, the measurement attitude data 202, and the bearing-distance data 105.

The three-dimensional point cloud generating unit 123 then generates the three-dimensional point cloud data 203 representing the three-dimensional coordinate value of each irradiation point, and outputs the three-dimensional point cloud data 203 being generated.

Position estimation processing is performed in step S150.

In step S150, the position estimation unit 220 calculates a three-dimensional coordinate value of an estimated position by using the measurement position data 201. The estimated position is a position estimated as the position of the measuring vehicle 110 when the point cloud image 310 is displayed.

The position estimation unit 220 then generates the estimated position data 229 representing the three-dimensional coordinate value of the estimated position, and outputs the estimated position data 229 being generated.

The position estimation unit 220 calculates the estimated position as follows.

The position estimation unit 220 obtains a difference between the time when the latest measurement position data 201 is acquired and the current time and then calculates, as the estimated position, the self position at the current time from a path of travel, angular velocity, and acceleration at the time when the latest measurement position data 201 is acquired. Here, the current time is the time when the display 300 displays the point cloud image 310 on the basis of the projected point cloud data 235 and the projected mark data 236 output from the two-dimensional projection unit 230. The current time is determined by considering the processing time required for the point cloud image 310, which is acquired at the same time as the time when the measurement position data 201 is acquired, to be displayed on the display 300 after the measurement position data 201 is acquired.

It is assumed, for example, that at time T0, the measuring vehicle 110 at point P0 is moving in a uniform linear motion at a speed of 50 kilometers per hour in an X-axis direction. In this case, at current time T1, the measuring vehicle 110 is estimated to be at point P1 forward in the X-axis direction by (50 * 1000/3600) * (T1 - T0) [meters] from point P0.

Two-dimensional projection processing is performed in step S160.

In step S160, the two-dimensional projection unit 230 uses a three-dimensional point cloud database, the measurement position data 201, and the measurement attitude data 202 to generate the projected point cloud data 235 according to the information represented by the control data 204.

The two-dimensional projection unit 230 uses the measurement position data 201 and generates the projected mark data 236 according to the information represented by the control data 204.

Then, the two-dimensional projection unit 230 outputs the projected point cloud data 235 and the projected mark data 236 to the display 300.

Point cloud image display processing is performed in step S170.

In step S170, the display 300 generates the point cloud image 310 by using the projected point cloud data 235 and the projected mark data 236, and displays the point cloud image 310 being generated.

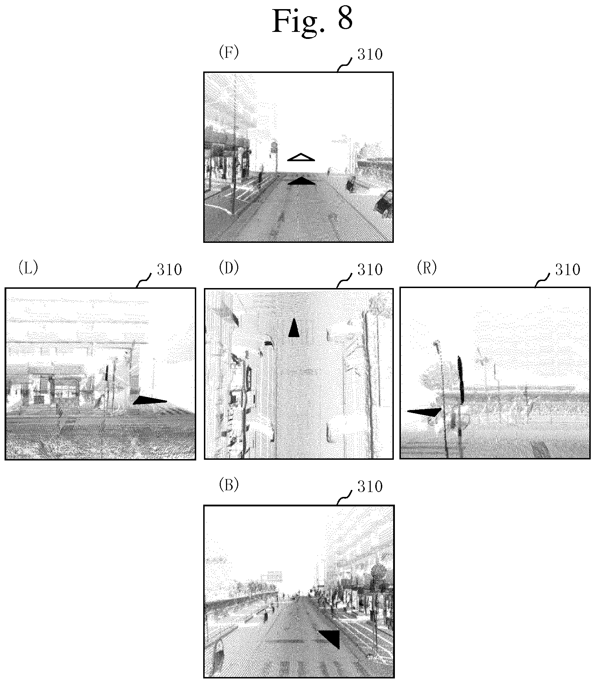

FIG. 8 illustrates the point cloud image 310 for each gaze direction.

A view (F) of FIG. 8 illustrates the point cloud image 310 of when the forward button 321F is pressed, or when the gaze direction is directed in the direction of travel of the measuring vehicle 110.

A view (B) of FIG. 8 illustrates the point cloud image 310 of when the backward button 321B is pressed, or when the gaze direction is directed opposite to the direction of travel of the measuring vehicle 110.

A view (L) of FIG. 8 illustrates the point cloud image 310 of when the left button 321L is pressed, or when the gaze direction is directed leftward with respect to the direction of travel of the measuring vehicle 110.

A view (R) of FIG. 8 illustrates the point cloud image 310 of when the right button 321R is pressed, or when the gaze direction is directed rightward with respect to the direction of travel of the measuring vehicle 110.

A view (D) of FIG. 8 illustrates the point cloud image 310 of when the downward button 321D is pressed, or when the gaze direction is directed downward.

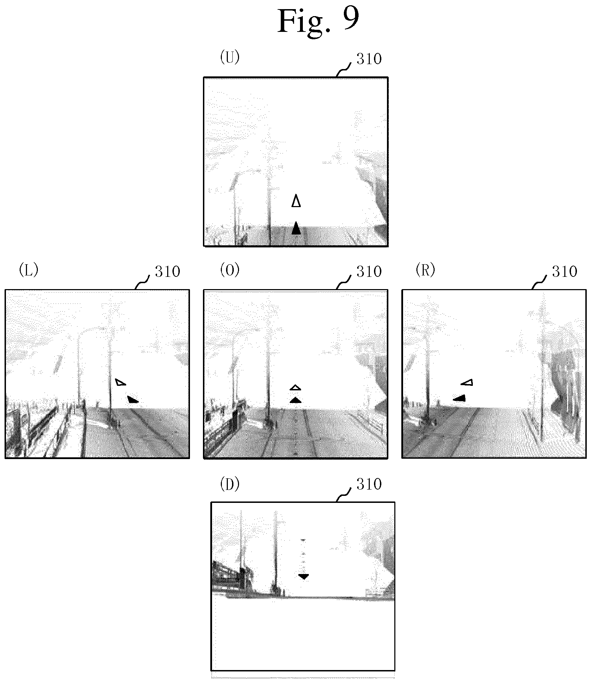

FIG. 9 illustrates the point cloud image 310 with an offset in an upward, downward, leftward, or rightward direction.

A view (0) of FIG. 9 illustrates the point cloud image 310 of when the amount of shift specified by the up-down widget 322Z and the amount of shift specified by the left-right widget 322X are zero, or when the viewpoint position is the same as the reference viewpoint position 411.

A view (U) of FIG. 9 illustrates the point cloud image 310 of when +5.0 meters is specified in the up-down widget 322Z, or when the viewpoint position is moved upward from the reference viewpoint position 411.

A view (D) of FIG. 9 illustrates the point cloud image 310 of when -5.0 meters is specified in the up-down widget 322Z, or when the viewpoint position is moved downward from the reference viewpoint position 411.

A view (L) of FIG. 9 illustrates the point cloud image 310 of when +5.0 meters is specified in the left-right widget 322X, or when the viewpoint position is moved leftward from the reference viewpoint position 411.

A view (R) of FIG. 9 illustrates the point cloud image 310 of when -5.0 meters is specified in the left-right widget 322X, or when the viewpoint position is moved rightward from the reference viewpoint position 411.

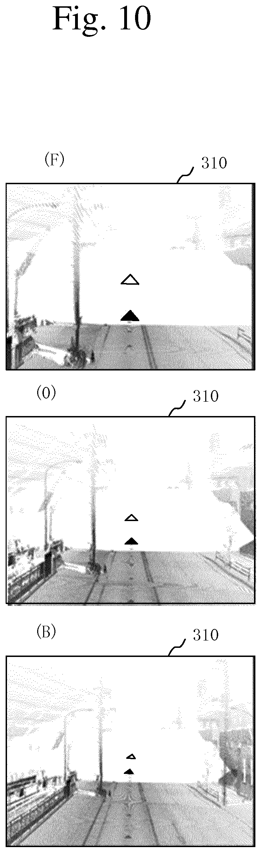

FIG. 10 illustrates the point cloud image 310 with an offset in a frontward or backward direction.

A view (O) of FIG. 10 illustrates the point cloud image 310 of when the amount of shift specified in the front-back widget 322Y is zero, or when the viewpoint position is the same as the reference viewpoint position 411.

A view (F) of FIG. 10 illustrates the point cloud image 310 of when +5.0 meters is specified in the front-back widget 322Y, or when the viewpoint position is moved frontward from the reference viewpoint position 411.

A view (B) of FIG. 10 illustrates the point cloud image 310 of when -5.0 meters is specified in the front-back widget 322Y, or when the viewpoint position is moved backward from the reference viewpoint position 411.

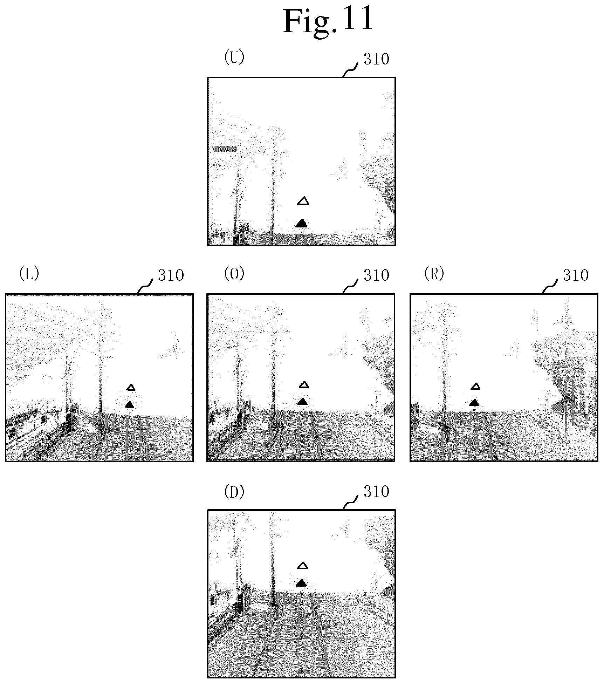

FIG. 11 illustrates the point cloud image 310 with an offset in an upward, downward, leftward, or rightward rotation.

A view (O) of FIG. 11 illustrates the point cloud image 310 of when the offset amount specified in the angle-of-elevation widget 323P and the offset amount specified in the angle-of-bearing widget 323Y are zero, or when the plane of two-dimensional projection is not rotated.

A view (U) of FIG. 11 illustrates the point cloud image 310 of when +10 degrees is specified in the angle-of-elevation widget 323P, or when the plane of two-dimensional projection is tilted upward.

A view (D) of FIG. 11 illustrates the point cloud image 310 of when -10 degrees is specified in the angle-of-elevation widget 323P, or when the plane of two-dimensional projection is tilted downward.

A view (L) of FIG. 11 illustrates the point cloud image 310 of when +10 degrees is specified in the angle-of-bearing widget 323Y, or when the plane of two-dimensional projection is tilted leftward.

A view (R) of FIG. 11 illustrates the point cloud image 310 of when -10 degrees is specified in the angle-of-bearing widget 323Y, or when the plane of two-dimensional projection is tilted rightward.

Description of effect

According to the first embodiment, there can be provided the point cloud image generator 100 for displaying the point cloud image of the feature acquired at the measurement point in a desired mode in the system capable of displaying, in real time, the point cloud image of the feature acquired during travel.

The point cloud image generator 100 can display the point cloud image 310 representing the three-dimensional point cloud 311 seen from the gaze direction specified by the user.

The user can easily change the gaze direction in which the three-dimensional point cloud 311 is seen by pressing a button in the interface image 320.

The user can easily change the gaze direction in which the three-dimensional point cloud 311 is seen by specifying the amount of shift and the offset amount with the widget in the interface image 320.

The user can reset the amount of shift and the offset amount being specified by pressing the clear button 329.

The user can see an obstacle on the road and a cave-in on the road from various directions by changing the gaze direction in which the three-dimensional point cloud 311 is seen.

The point cloud image generator 100 can include the measurement position mark 312 and the estimated position mark 313 in the point cloud image 310.

The user can grasp the relationship among the measurement position, the current position (estimated position), and the three-dimensional point cloud 311 by referring to the measurement position mark 312 and the estimated position mark 313.

The user can grasp the position of the obstacle on the road and the cave-in on the road by grasping the relationship among the measurement position, the current position, and the three-dimensional point cloud 311.

Drawing a triangle being easier than drawing a circle, the point cloud image generator 100 draws each three-dimensional point of the three-dimensional point cloud in a triangular shape to be able to draw the three-dimensional point cloud in a short time by using an inexpensive graphic board.

Another Configuration

The measured data processing section 200 may be formed of one computer or a plurality of computers. For example, the measured data processing section 200 may be formed of a first device including the position calculation unit 121, the attitude calculation unit 122, and the three-dimensional point cloud generating unit 123, and a second device including the position estimation unit 220 and the two-dimensional projection unit 230. The first device is mounted on the measuring vehicle 110. On the other hand, the second device may be mounted on the measuring vehicle 110 or provided at a remote center. The display 300 and the control unit 400 may be mounted on the measuring vehicle 110 or provided at a remote center.

Either the measurement position mark 312 or the estimated position mark 313 may be omitted in the point cloud image 310.

A path-of-travel mark indicating the path of travel of the measuring vehicle 110 may be added to the point cloud image 310.

At least one of the buttons or widgets may be omitted in the interface image 320.

Description of hardware configuration

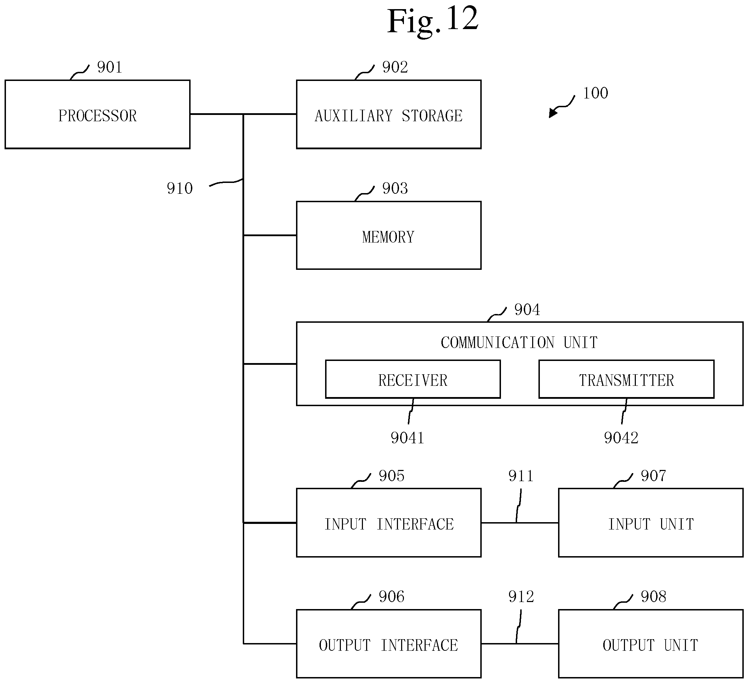

An example of a hardware configuration of the point cloud image generator 100 will be described with reference to FIG. 12.

The point cloud image generator 100 is a computer including hardware such as a processor 901, an auxiliary storage 902, a memory 903, a communication unit 904, an input interface 905, and an output interface 906.

The processor 901 is connected to the other hardware via a signal line 910. The input interface 905 is connected to an input unit 907 via a cable 911. The output interface 906 is connected to an output unit 908 via a cable 912.

The processor 901 is an IC that performs processing and controls the other hardware. An example of the processor 901 is a CPU, a DSP, or a GPU. The IC is an abbreviation for integrated circuit. The CPU is an abbreviation for central processing unit, the DSP is an abbreviation for digital signal processor, and the GPU is an abbreviation for graphics processing unit.

The auxiliary storage 902 stores data. An example of the auxiliary storage 902 is a ROM, a flash memory, or an HDD. The ROM is an abbreviation for read only memory, and the HDD is an abbreviation for hard disk drive.

The memory 903 stores data. An example of the memory 903 is a RAM. The RAM is an abbreviation for random access memory.

The communication unit 904 includes a receiver 9041 for receiving data and a transmitter 9042 for transmitting data. An example of the communication unit 904 is a communication chip or an NIC. The NIC is an abbreviation for network interface card.

The input interface 905 is a port to which the cable 911 is connected, where an example of the port is a USB terminal. The USB is an abbreviation for universal serial bus.

The output interface 906 is a port to which the cable 912 is connected, where an example of the port is the USB terminal or an HDMI terminal. The HDMI (registered trademark) is an abbreviation for high definition multimedia interface.

The input unit 907 is used to input data, a command, and a request. An example of the input unit 907 is a mouse, a keyboard, a touch panel, or a touch pad.

The output unit 908 is used to output data, a result, and a response. An example of the output unit 908 is a display or a printer. An example of the display is an LCD. The LCD is an abbreviation for liquid crystal display.

An OS is stored in the auxiliary storage 902. The OS is an abbreviation for operating system.

The auxiliary storage 902 further stores a program for implementing the function of the "unit" such as the position calculation unit 121, the attitude calculation unit 122, the three-dimensional point cloud generating unit 123, the position estimation unit 220, and the two-dimensional projection unit 230. The program implementing the function of the "unit" can be stored in a storage medium.

At least a part of the OS is loaded to the memory 903, and the processor 901 executes the program implementing the function of the "unit" while executing the OS. The program implementing the function of the "unit" is loaded to the memory 903, read into the processor 901, and executed by the processor 901.

Note that the point cloud image generator 100 may include a plurality of the processors 901, which may cooperatively execute the program implementing the function of the "unit".

Data, information, a signal value, a variable value, and the like representing the result of processing performed by the "unit" are stored in the memory 903, the auxiliary storage 902, a register in the processor 901, or a cache memory in the processor 901.

The "unit" may be implemented as "circuitry". The "unit" may be replaced with a "circuit", a "step", a "procedure", or "processing".

The "circuit" and "circuitry" are concepts involving processing circuits such as the processor 901, a logic IC, a GA, an ASIC, and an FPGA. The GA is an abbreviation for gate array, the ASIC is an abbreviation for application specific integrated circuit, and the FPGA is an abbreviation for field-programmable gate array.

Second Embodiment

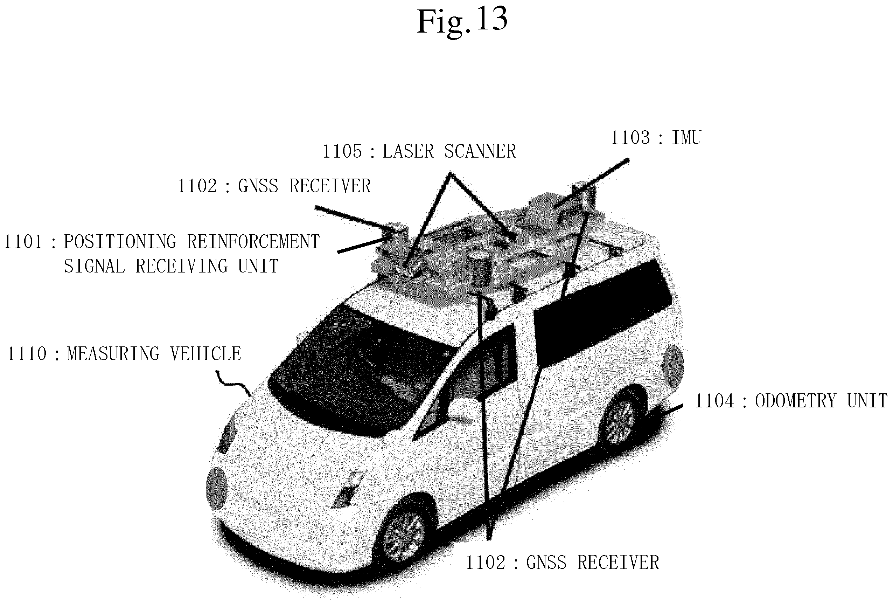

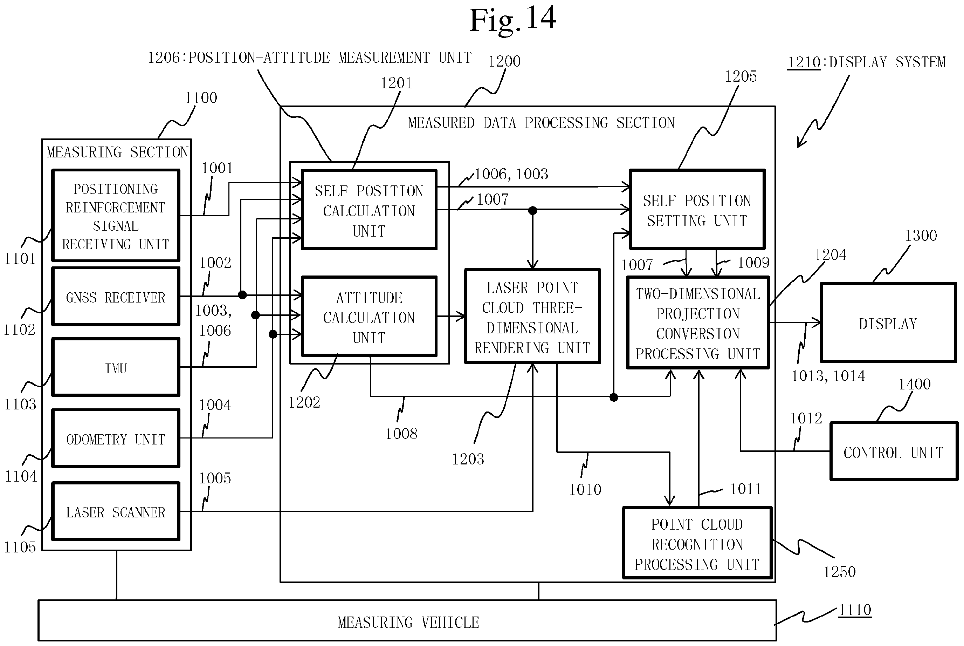

FIG. 13 is a diagram illustrating an example of a measuring vehicle equipped with a display system according to a second embodiment of the present invention. FIG. 14 is a diagram illustrating the configuration of the display system according to the second embodiment. As illustrated in FIG. 13, various measurement instruments making up a measuring section 1100 are externally mounted on a top panel installed on a roof of a measuring vehicle 1110 being a mobile body. The measuring vehicle 1110 is equipped with the measuring section 1100 as well as a measured data processing section 1200, a display 1300, and a control unit 1400 which will be described later to constitute an MMS. On board the measuring vehicle 1110 are a driver, an operator of the display system, an inspector who stares at a screen display on the display system and inspects the road surface, and the like.

As illustrated in FIG. 14, the display system according to the second embodiment includes the measuring section 1100 externally mounted on the measuring vehicle 1110, the measured data processing section 1200, the display 1300, and the control unit 1400, thereby displaying a road surface condition on the display 1300. The measured data processing section 1200 makes up a data processing unit and is mounted in the interior of the measuring vehicle 1110. The measured data processing section 1200 includes a position-attitude measurement unit 1206, a laser point cloud three-dimensional rendering unit 1203, a two-dimensional projection conversion processing unit 1204, a self position setting unit 1205, and a point cloud recognition processing unit 1250. The display 1300 and the control unit 1400 are mounted in the interior of the measuring vehicle 1110.

Note that the display 1300 or the control unit 1400 may be included outside the measuring vehicle 1110, in which case the measured data processing section 1200 and each of the display 1300 and the control unit 1400 are connected by a wireless data transmitter.

The measuring section 1100 includes a positioning reinforcement signal receiving unit 1101, a GNSS receiver 1102, an IMU 1103, an odometry unit 1104, and a laser scanner 1105, and acquires various measured data at each measurement time. The IMU is an abbreviation for inertial measurement unit. The measuring section 1100 measures the measurement time by counting clock pulses. The measured data processing section 1200 processes the various measured data acquired by the measuring section 1100 and generates point cloud image data 1013.

The measured data processing section 1200 includes a central processing unit (CPU), a storage, and the like. The display 1300 displays a point cloud image from the point cloud image data 1013 generated by the measured data processing section 1200. The control unit 1400 specifies a display mode of the point cloud image by inputting viewpoint information 1012 such as a viewpoint and a viewpoint direction of the point cloud image displayed on the display 1300.

The positioning reinforcement signal receiving unit 1101 acquires positioning reinforcement data 1001 used in high-accuracy positioning calculation of a self position performed by a self position calculation unit 1201 (to be described later) via a satellite in a global navigation satellite system (GNSS), a ground-based wireless LAN, or mobile phone line. The GNSS satellite can be a GPS, a global navigation satellite system (GLONASS), a GALILEO, a quasi-zenith satellite, or the like.

Note that the quasi-zenith satellite is located at a high angle of elevation of 60° or higher in Japan, so that the positioning reinforcement signal receiving unit 1101 can receive positioning reinforcement information from the quasi-zenith satellite relatively constantly.

The positioning reinforcement information can be distributed from the GNSS satellite or a GNSS correction information distribution service provider via the wireless LAN or a mobile telephone network. In the case where the quasi-zenith satellite is the GNSS satellite distributing the positioning reinforcement information, the positioning reinforcement information allowing reinforcement with centimeter positioning accuracy is included in an L6 band signal transmitted from the quasi-zenith satellite. The positioning reinforcement information includes a satellite clock error, an orbit error, and inter-frequency bias of the GNSS satellite as well as an ionospheric propagation delay error and a tropospheric delay error of the L6 band signal between the GNSS satellite and an observation point.

The GNSS receiver 1102 receives a GNSS positioning signal from the GPS, GLONASS, GALILEO, quasi-zenith satellite, or the like and acquires positioning data 1002 representing the position of the measuring vehicle at intervals (such as 10 Hz) shorter than 0.1 seconds, for example. The positioning data 1002 being acquired is output together with a time tag of the measurement time. The GNSS positioning signal is an L1, L2, or L5 band GNSS signal transmitted from the GNSS satellite such as the GPS satellite, the GLONASS satellite, the GALILEO satellite, or the like, and can measure a time difference (pseudo distance) between the GNSS satellite and an observation point, a carrier phase, and the time. Observed data of the GNSS positioning signal includes a navigation message made up of the almanac, orbit information, a clock correction value, ionospheric correction data, health data, and the like, and code information such as a C/A code or a P code obtained by modulating a signal carrier. High-accuracy, real-time positioning can be performed by using the observed data such as the code of the GNSS positioning signal and the carrier phase.

Note that the GNSS receiver 1102 may be preferably made up of three GNSS signal receiving antennas and three receivers connected to the respective GNSS signal receiving antennas. In this case, the three GNSS signal receiving antennas and the receivers are used to be able to measure the attitude of the measuring vehicle 1110 with the GNSS positioning signal.

The GNSS receiver may also be made up of one or two GNSS signal receiving antennas and one or two receivers connected to the respective GNSS signal receiving antennas. Alternatively, the GNSS receiver 1102 and the positioning reinforcement signal receiving unit 1101 may be formed integrally.

When the GNSS receiver 1102 is made up of N (N is an integer of 2 or more) GNSS signal receiving antennas and receivers, a position vector from the center of gravity of the N GNSS receivers 1102 to the laser scanner 1105 is obtained in advance. Then, a position coordinate obtained by subtracting the position vector from the center of gravity of the measured data from the N GNSS receivers 1102 is obtained as the position of the laser scanner 1105 of the measuring vehicle 1110.

The IMU 1103 includes a gyroscope for acquiring angular data representing the inclination (a pitch angle, a roll angle, and a yaw angle) of the measuring vehicle in three axial directions as well as angular velocity data 1003, and an acceleration sensor for acquiring acceleration data 1006 in the three axial directions. The IMU 1103 outputs the angular data, the angular velocity data 1003, and the acceleration data 1006 at intervals (such as 100 Hz) shorter than 0.1 seconds, for example, together with the measurement time.

The odometry unit 1104 acquires travel distance data 1004 representing the travel distance by integration of a rolling radius of the tire and rotational speed thereof from rotational speed or a vehicle speed pulse of the tire obtained in response to the rotation of the wheel of the measuring vehicle by odometry. The odometry unit 1104 outputs the travel distance data 1004 at intervals (such as 10 Hz) shorter than 0.1 seconds, for example, together with the measurement time.

The laser scanner 1105 emits a pulse-modulated laser. The laser scanner 1105 performs scanning while changing the direction of emission of the laser by rotating an optical mirror. The laser scanner 1105 scans a feature located around the measuring vehicle at a predetermined scanning speed (such as 100 rotations/second) and finds a "distance" to the feature at a plurality of scanning points, the distance being found from the difference between an emission time of the laser and a reception time of the laser reflected from the feature. The laser scanner 1105 further finds a "direction" representing the direction of emission of the laser at each scanning point, and outputs it as distance-direction data 1005. The laser scanner 1105 also receives a laser pulse reflected from a laser irradiation point on the object in the direction of emission of the laser, and acquires received intensity of the energy of the laser pulse being received as "laser reflection intensity". The laser scanner 1105 manages the distance-direction data 1005 and the laser reflection intensity in association with the measurement time of the scanner, and outputs the distance-direction data 1005, laser reflection intensity data, and the measurement time of the data 30,000 times per second, for example.

Note that the measurement time of the laser scanner 1105 may be corrected on the basis of time data distributed from the GNSS satellite and received by the GNSS receiver 1102.

Next, the position-attitude measurement unit 1206 includes a self position calculation unit 1201 for measuring the self position of the measuring vehicle 1110 while the measuring vehicle 1110 is on the move, and an attitude calculation unit 1202 for measuring the attitude of the measuring vehicle 1110.

The self position calculation unit 1201 performs GNSS/INS integrated navigation calculation by dead reckoning on the basis of the positioning reinforcement data 1001 from the positioning reinforcement signal receiving unit 1101, the positioning data 1002 from the GNSS receiver 1102, the measured information from the IMU 1103, the travel distance data 1004 from the odometry unit 1104, and the measurement time of each data. The GNSS is an abbreviation for global navigation satellite system, and the INS is an abbreviation for inertial navigation system.

The self position calculation unit 1201 calculates, by GNSS/INS integrated navigation calculation, self position data representing the position of the measuring vehicle 1110 at the measurement time of the distance-direction data 1005 as well as velocity, acceleration, and angular velocity data of the measuring vehicle 1110. The measured information from the IMU 1103 is the angular velocity data 1003, the acceleration data 1006, and the like. The self position calculation unit 1201 outputs the self position data and its measurement time to the two-dimensional projection conversion processing unit 1204 and the self position setting unit 1205. The self position calculation unit 1201 also outputs the acceleration data 1006, the angular velocity data 1003, and their measurement times to the self position setting unit 1205.

The attitude calculation unit 1202 performs GNSS/INS integrated navigation calculation by dead reckoning on the basis of the positioning data 1002 from the GNSS receiver 1102, the measured information from the IMU 1103, the travel distance data 1004 from the odometry unit 1104, and the measurement time of each data. Through GNSS/INS integrated navigation calculation, the attitude calculation unit 1202 calculates attitude data 1008 representing the attitude of the laser scanner 1105 mounted on the measuring vehicle 1110 at the measurement time of the distance-direction data 1005. The attitude calculation unit 1202 outputs the attitude data 1008 and its measurement time to the two-dimensional projection conversion processing unit 1204 and the self position setting unit 1205.

While the measuring vehicle 1110 is on the move, the laser point cloud three-dimensional rendering unit 1203 generates three-dimensional coordinate point cloud data 1010 on the basis of the attitude data 1008 and its measurement time from the attitude calculation unit 1202, the self position data 1007 and its measurement time from the self position calculation unit 1201, and the measured data from the laser scanner 1105 while synchronizing the times. The measured data from the laser scanner 1105 includes the distance-direction data 1005, the laser reflection intensity, and the measurement time. The three-dimensional coordinate point cloud data 1010 is made up of a group of three-dimensional coordinate points including a three-dimensional coordinate and its luminance data, the three-dimensional coordinate being successively acquired at each measurement time in the measured data and representing each reflection point of the laser from the laser scanner 1105 (such point will be hereinafter referred to as a laser measurement point or measurement point) on a feature or a road surface. The laser point cloud three-dimensional rendering unit 1203 successively outputs the three-dimensional coordinate point cloud data 1010 being generated to the point cloud recognition processing unit 1250. At this time, the luminance data of each three-dimensional coordinate point in the three-dimensional coordinate point cloud data 1010 represents the laser reflection intensity of the corresponding laser reflection point on a scale of a predetermined number of bits (such as a gray scale).

Here, the laser point cloud three-dimensional rendering unit 1203 performs processing that corrects the "direction" included in the distance-direction data 1005 to a "direction" expressed in ENU coordinate system on the basis of the attitude data 1008 representing the attitude of the laser scanner 1105 mounted on the measuring vehicle 1110. The "direction" included in the distance-direction data 1005 represents the direction of emission of the laser expressed in a fixed coordinate system (local coordinate system) of the measuring vehicle 1110. The ENU coordinate system is an absolute coordinate system with three axes corresponding to E (east direction), N (north direction), and U (zenith direction).

The laser point cloud three-dimensional rendering unit 1203 further obtains the position of the measuring vehicle 1110 from the self position data 1007 output from the self position calculation unit 1201. Then, the laser point cloud three-dimensional rendering unit 1203 expresses the position of the laser irradiation point in the ENU coordinate system on the basis of the position of the measuring vehicle 1110 and the "distance" to the laser reflection point included in the distance-direction data 1005 in the direction of emission of the laser being corrected, thereby finding the three-dimensional coordinate of each three-dimensional coordinate point in the three-dimensional coordinate point cloud data 1010.

The point cloud recognition processing unit 1250 obtains a difference between a reference height of the measuring vehicle 1110 and the height of each three-dimensional coordinate point in the three-dimensional coordinate point cloud data 1010 output from the laser point cloud three-dimensional rendering unit 1203, while the measuring vehicle 1110 is on the move. The point cloud recognition processing unit 1250 then selects color information set in advance depending on the difference in height being obtained, and colors each three-dimensional coordinate point. The reference height of the measuring vehicle 1110 is set to the height of the tread of a tire of the measuring vehicle 1110 (the height of the surface on which the measuring vehicle 1110 travels), for example. The color information is set in advance such that a different color is set for each area divided with a height interval of 5 cm in the vertical direction (height direction) from the reference height, for example.

Accordingly, for example, a first color (such as yellow) is set when the three-dimensional coordinate point is higher than the reference height of the measuring vehicle 1110 by 0 cm or more and less than 5 cm, a second color (such as red) is set when the three-dimensional coordinate point is higher than the reference height by 5 cm or more and less than 10 cm, and a third color (such as pink) is set when the three-dimensional coordinate point is higher than the reference height by 10 cm or more and less than 15 cm.

Moreover, for example, a fourth color (such as yellowish green) is set when the three-dimensional coordinate point is lower than the reference height of the measuring vehicle 1110 by 0 cm or more and less than 5 cm, a fifth color (such as light blue) is set when the three-dimensional coordinate point is lower than the reference height by 5 cm or more and less than 10 cm, and a sixth color (such as blue) is set when the three-dimensional coordinate point is lower than the reference height by 10 cm or more and less than 15 cm.

In the three-dimensional coordinate point cloud data 1010, each three-dimensional coordinate point out of a color coding range which is a range from the reference height to a predetermined height is assigned color information in the gray scale based on the luminance data. For example, a position higher than the road surface by 15 cm or more and a position lower than the road surface by 15 cm or more are each assigned color information that is a shade of gray corresponding to the luminance data between black and white.

Note that the point cloud recognition processing unit 1250 may obtain the attitude data 1008 from the attitude calculation unit 1202 and recognize the direction of travel of the vehicle (the direction in which the wheel of the measuring vehicle 1110 rolls and travels or the front-back direction of the measuring vehicle 1110) on the basis of the attitude data 1008. As a result, the point cloud recognition processing unit 1250 can regard, as a boundary of the road, a position corresponding to a general road width (such as the width of 4 m or wider) or wider in a vehicle width direction of the measuring vehicle 1110 perpendicular to the direction of travel of the vehicle. Then, for an area outside the boundary of the road, the point cloud recognition processing unit 1250 may assign color information that is a shade in the gray scale corresponding to the luminance data to the three-dimensional coordinate point cloud data 1010, and generate colored three-dimensional coordinate point cloud data 1011.

The point cloud recognition processing unit 1250 generates the colored three-dimensional coordinate point cloud data 1011 by assigning the color information being selected to the three-dimensional coordinate and its luminance data of the three-dimensional coordinate point corresponding to each laser reflection point in the three-dimensional coordinate point cloud data 1010 that is successively generated at each measurement time by the laser point cloud three-dimensional rendering unit 1203. The point cloud recognition processing unit 1250 then inputs the generated data to the two-dimensional projection conversion processing unit 1204.

The self position setting unit 1205 receives input of the self position data 1007 expressed in the three-dimensional coordinates (ENU coordinate system) as well as the acceleration and angular velocity data 1003 from the self position calculation unit 1201. The self position setting unit 1205 receives input of the attitude data 1008 expressed in the three-dimensional coordinate system (ENU coordinate system) from the attitude calculation unit 1202. The self position setting unit 1205 stores, in a memory, the self position data 1007 being input. The self position setting unit 1205 outputs path data including the self position data 1007 input from the self position calculation unit 1201 at a current time t0 and a plurality of pieces of self position data (t0 - $\Delta$t, t0 - 2$\Delta$t, ..., t0 -N$\Delta$t) from the current time t0 up to a predetermined time n$\Delta$t (n = 1, 2, ···, N (a positive integer)). The self position setting unit 1205 also obtains the difference between the time at which the latest self position data 1007 is acquired and the current time. Next, the self position setting unit 1205 estimates the self position at the current time from the path data making up the path of travel as well as the velocity, the acceleration, and the angular velocity at the time the latest self position data 1007 is acquired according to kinematics, and outputs the self position as estimated self position data to the two-dimensional projection conversion processing unit 1204. Alternatively, the estimated self position may be obtained by calculating a spline curve passing through the plurality of pieces of self position data 1007. In using the spline curve, a plurality of velocities, accelerations, and angular velocities may be used as the path data.

The two-dimensional projection conversion processing unit 1204 successively projects, onto a two-dimensional screen, the three-dimensional coordinate points in the three-dimensional coordinate point cloud data 1010 for screen display from the colored three-dimensional coordinate point cloud data 1011 on the basis of the viewpoint information 1012 specified by the control unit 1400, the attitude data 1008 input from the attitude calculation unit 1202, and the self position data 1007 or the estimated self position data 1009 input from the self position setting unit 1205 while the measuring vehicle 1110 is on the move. Note that the colored three-dimensional coordinate point cloud data 1011 is the three-dimensional coordinate point cloud data 1010 assigned with the color information, and is successively generated at every measurement time by the point cloud recognition processing unit 1250.

Next, the two-dimensional projection conversion processing unit 1204 generates point cloud data expressed by two-dimensional coordinate points (such data will be hereinafter referred to as two-dimensional coordinate point cloud data) as point cloud image data 1013.

Then, the two-dimensional projection conversion processing unit 1204 inputs the point cloud image data 1013 being generated to the display 1300 and displays, on the screen of the display 1300, a point cloud image in which the road surface and its surrounding are colored.

The two-dimensional projection conversion processing unit 1204 further generates mark data 1014 on the basis of the viewpoint information 1012 specified by the control unit 1400, the attitude data 1008 input from the attitude calculation unit 1202, and the self position data 1007 or the estimated self position data 1009 input from the self position setting unit 1205 while the measuring vehicle 1110 is on the move. The mark data 1014 forms a self position mark or an estimated self position mark and a path mark.

The control unit 1400 outputs the viewpoint information 1012 viewed from the local coordinate system fixed to the measuring vehicle 1110 on the basis of information input by an operator while the measuring vehicle 1110 is on the move. The viewpoint information 1012 is made up of the viewpoint and the gaze direction, which are changed by an input from the operator. The control unit 1400 specifies a display mode of the point cloud image by inputting the viewpoint position, an amount of adjustment of the viewpoint position and the like of the point cloud image displayed on the display 1300.

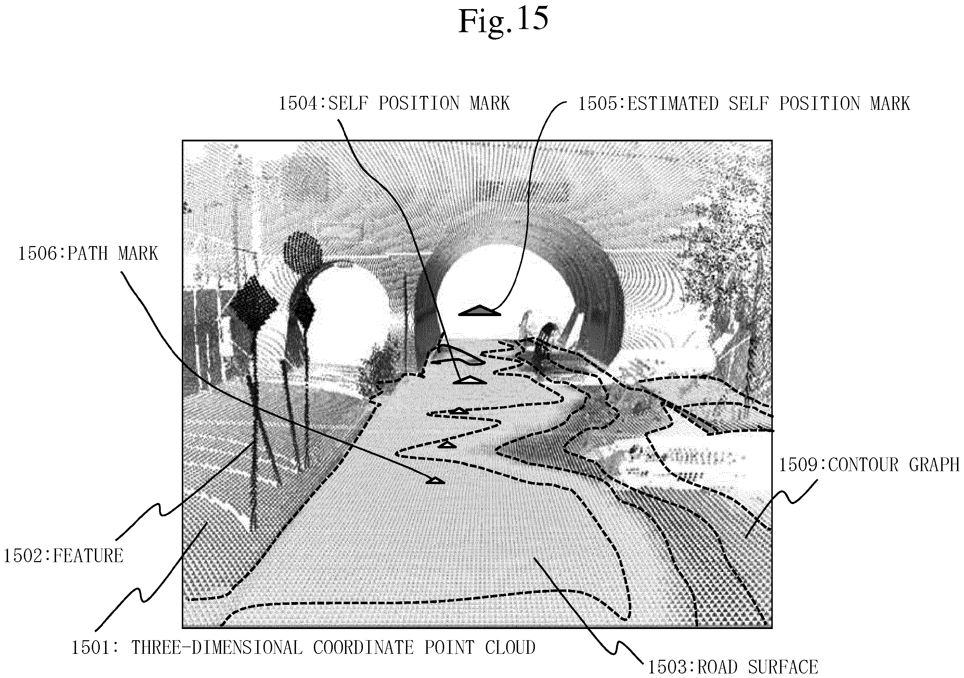

FIG. 15 is a view illustrating a display screen on the display 1300 that displays the point cloud image according to the second embodiment. As illustrated in the figure, the display 1300 displays the point cloud image formed of a three-dimensional coordinate point cloud 1501 that is acquired by the measuring vehicle 1110 on the move. The point cloud image includes an image representing a feature 1502 and an image representing a road surface 1503. Moreover, the point cloud image forms a contour-like point cloud graph (hereinafter referred to as a contour graph 1509) in which the three-dimensional coordinate points are colored on the basis of the color information assigned by the point cloud recognition processing unit 1250. The contour graph 1509 is a contour-like point cloud graph and is a color gradient map or a contour map expressed by point clouds. The display 1300 also displays images of a self position mark 1504, an estimated self position mark 1505, and a path mark 1506 on the basis of the mark data 1014 generated by the two-dimensional projection conversion processing unit 1204.

As illustrated in FIG. 15, the contour graph 1509 of the road surface 1503 is displayed on the display screen of the display 1300 while the measuring vehicle 1110 is on the move. The display 1300 can thus clearly and instantly display, on the display screen, a state of irregularities on the road surface 1503, a region with a low road surface height, a region with a high road surface height, a region where the road surface is raised, a region that is presumed to have a hole on the road surface, or the like. An inspector inspecting the road surface can immediately find a change in the road surface condition by using the display system 1210 while the measuring vehicle 1110 is on the move. Therefore, even on the occurrence of some deformation on the road surface (a change in the road surface condition) or an obstacle on the road surface, the situation can be handled by notifying a road administrator of information about the road surface condition on the spot, communicating the information about the road surface condition to the other traffic vehicle, or the like.

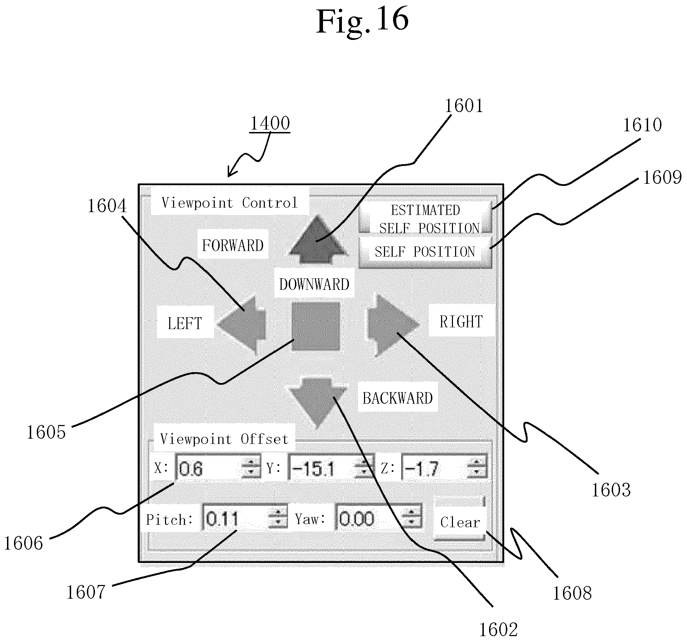

FIG. 16 is a diagram illustrating a display example of the control unit 1400 for controlling the viewpoint of the point cloud image in the display system according to the second embodiment.

The control unit 1400 includes four input buttons for switchably displaying a point cloud image of a feature seen in four directions being forward, backward, rightward, and leftward of the measuring vehicle, the four input buttons including a forward view selection button 1601, a backward view selection button 1602, a rightward view selection button 1603, and a leftward view selection button 1604. The control unit 1400 further includes at the center an input button that is a downward view selection button 1605 for displaying a point cloud image (bird's-eye view) of a feature seen downward from above. The input buttons being the forward view selection button 1601, the backward view selection button 1602, the rightward view selection button 1603, and the leftward view selection button 1604 are each represented by an arrow shape pointing in the gaze direction, for example, such that an operator can intuitively recognize each button. The input button being the downward view selection button 1605 is represented by a square shape, for example, such that the operator can intuitively recognize the button.

The control unit 1400 further includes a setting field for inputting and setting an offset value 1606 in each of horizontal (X), vertical (Z), and front-back (Y) directions with respect to the reference viewpoint position. The control unit 1400 further includes a setting field for inputting and setting an offset value 1607 which is an amount of adjustment of the viewpoint position for shifting the gaze direction from the reference viewpoint position by a predetermined angle in each of the horizontal direction (yaw) and the vertical direction (pitch).

The control unit 1400 further includes a clear button 1608 for initializing the offset values (1606 and 1607).

The two-dimensional projection conversion processing unit 1204 calculates the viewpoint position on the basis of the offset values (1606 and 1607) with respect to the reference viewpoint position, the offset values being input via the control unit 1400. Then, the two-dimensional projection conversion processing unit 1204 performs two-dimensional projection conversion processing by projecting, onto a two-dimensional plane, three-dimensional coordinate data of the point cloud image of the feature seen in any one of the forward, backward, rightward, leftward, and downward gaze directions specified by the control unit 1400 with respect to the viewpoint position being calculated and any one of the forward, backward, rightward, leftward, and downward gaze directions. Two-dimensional projection conversion processing is processing that converts three-dimensional coordinate data into two-dimensional coordinate data.

The point cloud image data 1013 includes the feature and the road surface subjected to two-dimensional projection processing by the two-dimensional projection conversion processing unit 1204. The point cloud image data 1013 is output to the display 1300 together with two-dimensional coordinate data of the self position mark 1504, two-dimensional coordinate data of the estimated self position mark 1505, and two-dimensional coordinate data of the path mark 1506.

The two-dimensional coordinate data of the self position mark 1504 is represented by the self position data 1007 (three-dimensional coordinate data) input from the self position setting unit 1205.

The two-dimensional coordinate data of the estimated self position mark 1505 representing the current self position is represented by the estimated self position data 1009 (three-dimensional coordinate data) input from the self position setting unit 1205.

The two-dimensional coordinate data of the path mark 1506 represents a plurality of pieces of past self position data 1007 (three-dimensional coordinate data) input from the self position setting unit 1205.

Here, the current time is the time at which the display 1300 displays an image on the basis of the two-dimensional point cloud coordinate data output from the two-dimensional projection conversion processing unit 1204. The current time is found in consideration of processing time (delay time) required for the point cloud image, which is acquired at the same time as the self position data 1007, to be generated by the two-dimensional projection conversion processing unit 1204, transmitted to the display 1300, and then displayed on the display 1300 after the self position data 1007 is acquired by the self position calculation unit 1201. Approximately one second is set as the delay time, for example. The delay time varies depending on the processing speed of the CPU making up the measured data processing section 1200, data transmission delay time, and the like (the delay time is set to about 0.1 to 3 seconds, for example, depending on the components). The self position mark 1504 is thus displayed at a position corresponding to the delay time with respect to the estimated self position mark 1505. In other words, the estimated self position mark 1505 is displayed at a position obtained by correcting the display position of the self position mark 1504 by the delay time, and thus a position closer to the current self position of the measuring vehicle 1110 and the laser scanner 1105 at the current time.

When the vehicle is at point P0 at time T0 [s] and moves linearly in the X-axis direction at a constant velocity of 50 [km/h], for example, the vehicle is estimated to be located at point P1 at the current time T1 [s], the point P1 being ahead of point P0 by 50 * 1000/3600 * (T1-T0) [m] in the X axis direction.

Note that the control unit 1400 may be provided with a switch button for controlling whether or not to display a self position 1609 and an estimated self position 1610. For example, the self position mark may be displayed by pressing the self position 1609, and be hidden by pressing the self position 1609 again. Moreover, for example, the estimated self position mark may be displayed by pressing the estimated self position 1610, and be hidden by pressing the estimated self position 1610 again.

When the self position data 1007 and the estimated self position data 1009 are input from the self position setting unit 1205, the two-dimensional projection conversion processing unit 1204 performs conversion processing to convert each of the self position mark and the estimated self position mark into two-dimensional coordinate data on the basis of the viewpoint information 1012 output by the control unit 1400. The self position mark indicates the self position data 1007 in three-dimensional coordinates, and the estimated self position mark indicates the estimated self position data 1009.

The two-dimensional projection conversion processing unit 1204 then outputs the two-dimensional coordinate data of the self position mark and the estimated self position mark on the display 1300 together with the point cloud image data 1013.

The aforementioned processing allows the two-dimensional projection conversion processing unit 1204 to perform projection conversion processing that converts the coordinate data of the point cloud image data 1013 generated at every measurement time and the coordinate data representing the self position and the current estimated self position into two-dimensional images seen from the viewpoint. Then, the two-dimensional projection conversion processing unit 1204 outputs, to the display 1300, an image representing the three-dimensional shape of the feature successively acquired by the laser scanner 1105.

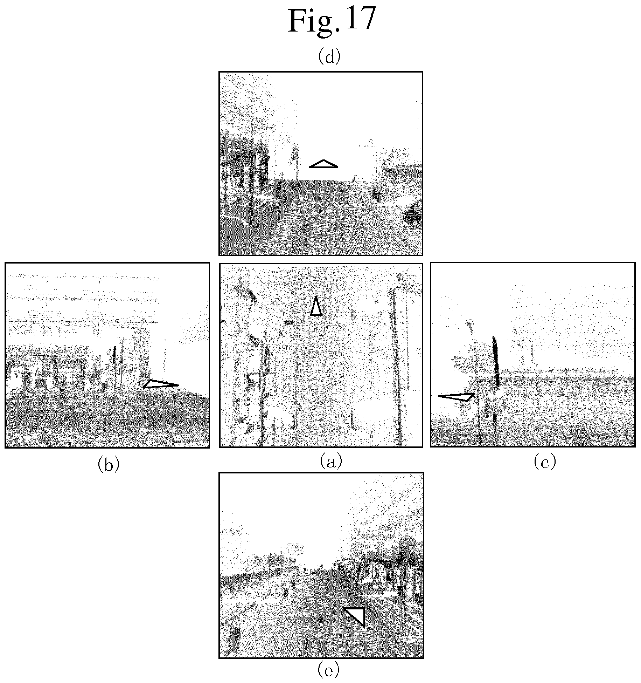

FIG. 17 is a set of views each illustrating an example of the point cloud image switchably displayed by selection of each of the five input buttons on the control unit 1400 illustrated in FIG. 16. In FIG. 17, (a) illustrates the point cloud image seen downward, (b) illustrates the point cloud image seen on the left, (c) illustrates the point cloud image seen on the right, (d) illustrates the point cloud image seen forward, and (e) illustrates the point cloud image seen backward. For the sake of simplifying the illustration, the contour graph 1509 is not displayed in the figure.

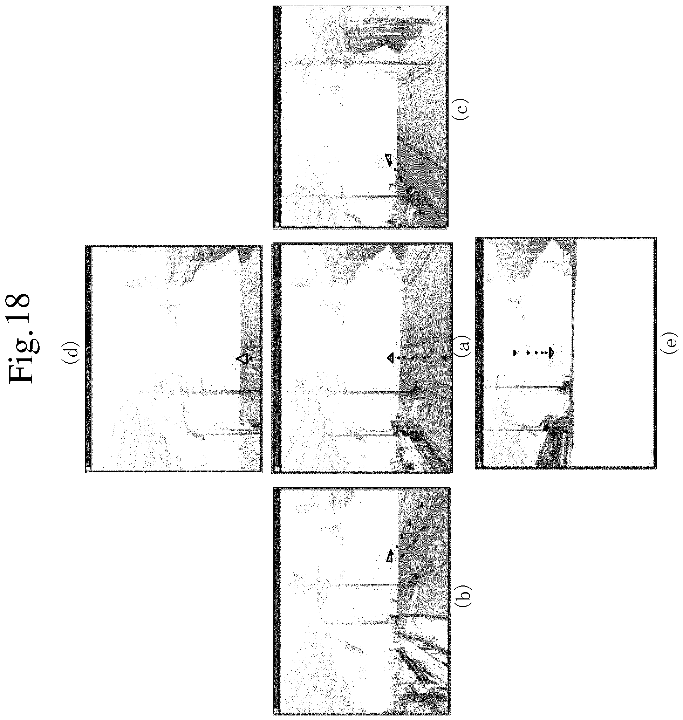

FIG. 18 is a set of views each illustrating an example of the point cloud image displayed when a predetermined offset value is set in a horizontal or vertical direction with respect to the reference viewpoint position in the offset value setting field of the control unit 1400 illustrated in FIG. 16. In FIG. 18, (a) illustrates the point cloud image seen from the reference viewpoint position, (b) illustrates an image of when a leftward 5-m offset value is set, (c) illustrates an image of when a rightward 5-m offset value is set, (d) illustrates an image of when an upward 5-m offset value is set, and (e) illustrates an image of when a downward 5-m offset value is set. For the sake of simplifying the illustration, the contour graph 1509 is not displayed in the figure.

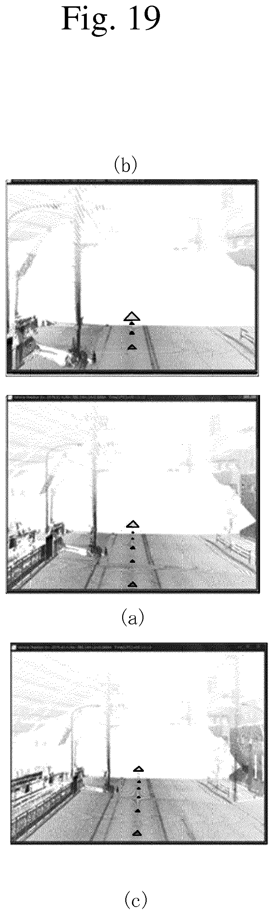

FIG. 19 is a set of views each illustrating an example of the point cloud image displayed when a predetermined offset value is set forward or backward with respect to the reference viewpoint position in the offset value setting field of the control unit 1400 illustrated in FIG. 16. In FIG. 19, (a) illustrates the point cloud image seen from the reference viewpoint position, (b) illustrates an image of when a forward 5-m offset value is set, and (c) illustrates an image of when a backward 5-m offset value is set. For the sake of simplifying the illustration, the contour graph 1509 is not displayed in the figure.

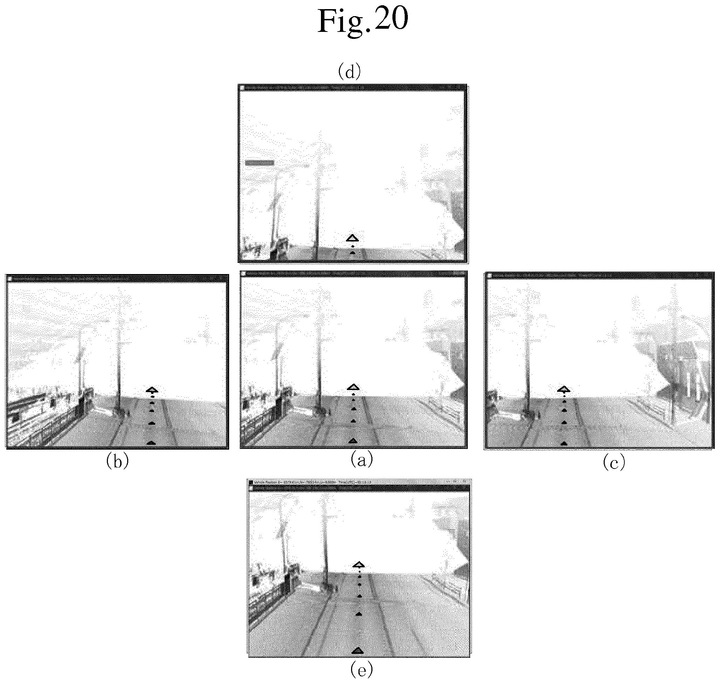

FIG. 20 is a set of views each illustrating an example of the point cloud image displayed when an offset value of a predetermined angle is set in a horizontal or vertical direction with respect to the reference gaze direction in the offset value setting field of the control unit 1400 illustrated in FIG. 16. In FIG. 20, (a) illustrates the point cloud image seen in the reference gaze direction, (b) illustrates an image of when a leftward 10° offset value is set, (c) illustrates an image of when a rightward 10°offset value is set, (d) illustrates an image of when an upward 10° offset value is set, and (e) illustrates an image of when a downward 10° offset value is set. For the sake of simplifying the illustration, the contour graph 1509 is not displayed in the figure.

As described above, the display system 1210 according to the second embodiment includes the position-attitude measurement unit 1206, the laser point cloud three-dimensional rendering unit 1203, the point cloud recognition processing unit 1250, the control unit 1400, the two-dimensional projection conversion processing unit 1204, and the display 1300.

The position-attitude measurement unit 1206 measures the position and attitude of the measuring vehicle 1110 while the measuring vehicle 1110 being a mobile body is on the move.

The laser point cloud three-dimensional rendering unit 1203 successively measures the three-dimensional position coordinate of the measurement point while the measuring vehicle 1110 is on the move, on the basis of the distance and direction information of the measurement point successively obtained by the laser scanner 1105 of the measuring vehicle 1110 as well as the position and attitude of the measuring vehicle 1110 successively obtained by the position-attitude measurement unit 1206. The measurement point corresponds to the laser irradiation point. The distance and direction information of the measurement point are successively obtained by the laser scanner 1105 performing laser scanning on the surrounding object including the road surface.

Then, the laser point cloud three-dimensional rendering unit 1203 outputs the three-dimensional position coordinate point being measured as the three-dimensional coordinate point cloud data 1010.

The point cloud recognition processing unit 1250 successively assigns the color information corresponding to height to the three-dimensional position coordinate point, which has the height within the color coding range, in the three-dimensional coordinate point cloud data 1010 that is successively output from the laser point cloud three-dimensional rendering unit 1203 while the measuring vehicle 1110 is on the move.

The viewpoint information 1012 is input to the control unit 1400.

The two-dimensional projection conversion processing unit 1204 generates the point cloud image data 1013 on the basis of the viewpoint information 1012 input on the control unit 1400 as well as the position and attitude of the measuring vehicle 1110 while the measuring vehicle 1110 is on the move. The point cloud image data 1013 is generated by projecting and converting the three-dimensional position coordinate point in the three-dimensional coordinate point cloud data 1010, which is assigned the color information by the point cloud recognition processing unit 1250, to a corresponding point in the two-dimensional screen.

The display 1300 displays the point cloud image data 1013 generated by the two-dimensional projection conversion processing unit 1204 on the screen while the measuring vehicle 1110 is on the move.

The display system 1210 of the second embodiment can display the contour graph 1509 (which is the contour-like point cloud graph and the color gradient map or contour map expressed by the point cloud) corresponding to the height of the road surface and at the same time change the viewpoint for viewing the road surface, while the measuring vehicle 1110 being the mobile body is on the move. It is thus possible to instantly display the road surface condition, which changes every moment with the movement of the measuring vehicle 1110, in a state that is easy to grasp visually.

While the measuring vehicle 1110 is on the move, a change can be made to the contour graph 1509 (which is the contour-like point cloud graph and the color gradient map or contour map expressed by the point cloud) and the viewpoint with respect to the surrounding object in real time (within the delay time of one second, for example). In addition, the two-dimensional projection conversion processing unit 1204 generates the point cloud image data 1013 by projecting and converting the three-dimensional position coordinate points of the self position, the estimated self position, and the path of the self position to the corresponding points within the two-dimensional screen. The two-dimensional projection conversion processing unit 1204 can thus change the acquisition plan, acquisition timing, or acquisition position of the three-dimensional coordinate point cloud data 1010 or the speed of movement while the measuring vehicle 1110 is on the move.

Moreover, the control unit 1400 has the forward view selection button 1601, the backward view selection button 1602, the rightward view selection button 1603, the leftward view selection button 1604, and the downward view selection button 1605. The control unit 1400 changes the viewpoint and the gaze direction on the basis of selection of each of the buttons. It is thus possible to easily and instantly change the viewpoint while the measuring vehicle 1110 is on the move. Moreover, the downward view selection button 1605 is arranged at the center. The leftward view selection button 1604 is arranged on the left side of the downward view selection button 1605, the rightward view selection button 1603 is arranged on the right side of the downward view selection button 1605, the forward view selection button 1601 is arranged above the downward view selection button 1605, and the backward view selection button 1602 is arranged below the downward view selection button 1605. Each selection button is represented by the arrow. This brings the advantage that the operation can be understood intuitively.

Third Embodiment

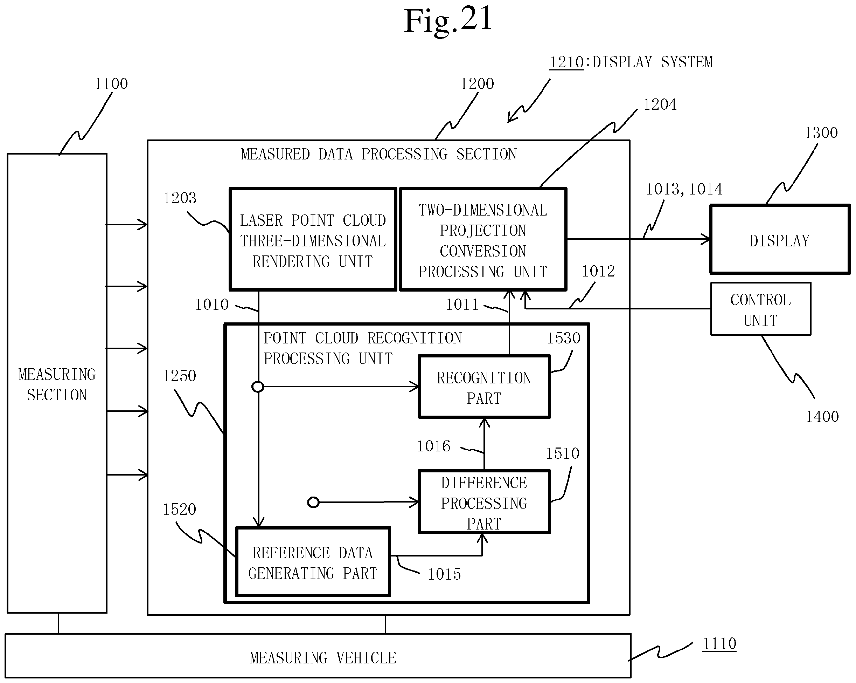

FIG. 21 is a diagram illustrating the configuration of a display system according to a third embodiment of the present invention. The display system according to the third embodiment illustrated in FIG. 21 is characterized in that the point cloud recognition processing unit 1250 of the display system according to the second embodiment described with reference to FIG. 14 includes a difference processing part 1510, a reference data generating part 1520, and a recognition part 1530.

Note that FIG. 21 omits illustration of a configuration identical to that in FIG. 14 as well as the signal or input/output data relevant to such configuration.

In the point cloud recognition processing unit 1250, three-dimensional coordinate point cloud data 1010 input from a laser point cloud three-dimensional rendering unit 1203 is successively input to the reference data generating part 1520 and also to the difference processing part 1510. The reference data generating part 1520 stores the three-dimensional coordinate point cloud data 1010 in time series, and generates reference three-dimensional point cloud data 1015 from the stored data. The reference three-dimensional point cloud data 1015 is composed of the three-dimensional coordinate point cloud data 1010 representing a reference model of a road surface, for example.

The difference processing part 1510 finds differential three-dimensional point cloud coordinate data 1016 between the reference three-dimensional point cloud data 1015, which is in the vicinity of the three-dimensional coordinate point cloud data 1010 input from the laser point cloud three-dimensional rendering unit 1203 and stored in the reference data generating part 1520, and the three-dimensional coordinate point cloud data 1010 input from the laser point cloud three-dimensional rendering unit 1203. Then, the difference processing part 1510 inputs the differential three-dimensional point cloud coordinate data 1016 to the recognition part 1530. On the basis of the differential three-dimensional point cloud coordinate data 1016, the recognition part 1530 assigns color information to three-dimensional point cloud coordinate data if a difference in height between the three-dimensional point cloud coordinate data and the reference three-dimensional point cloud data 1015 falls within a color coding range, the reference three-dimensional point cloud data representing the road surface in the vicinity of the three-dimensional coordinate point cloud data 1010 input from the laser point cloud three-dimensional rendering unit 1203, and the color information corresponding to the difference in height.

A two-dimensional projection conversion processing unit 1204 successively projects, onto a two-dimensional screen for screen display, each three-dimensional coordinate point of the three-dimensional coordinate point cloud data 1010 in colored three-dimensional coordinate point cloud data 1011 that is assigned the color information by the recognition part 1530 of the point cloud recognition processing unit 1250.

Then, the two-dimensional projection conversion processing unit 1204 generates point cloud data represented by two-dimensional coordinate points (such data will be hereinafter referred to as two-dimensional coordinate point cloud data) as point cloud image data 1013. The two-dimensional projection conversion processing unit 1204 inputs the point cloud image data 1013 being generated to a display 1300. The display 1300 displays, on a screen, a differential image from the reference three-dimensional point cloud data 1015 representing the road surface as a point cloud image that is colored around the road surface.

There will now be described the processing of generating the three-dimensional point cloud by the reference data generating part 1520.

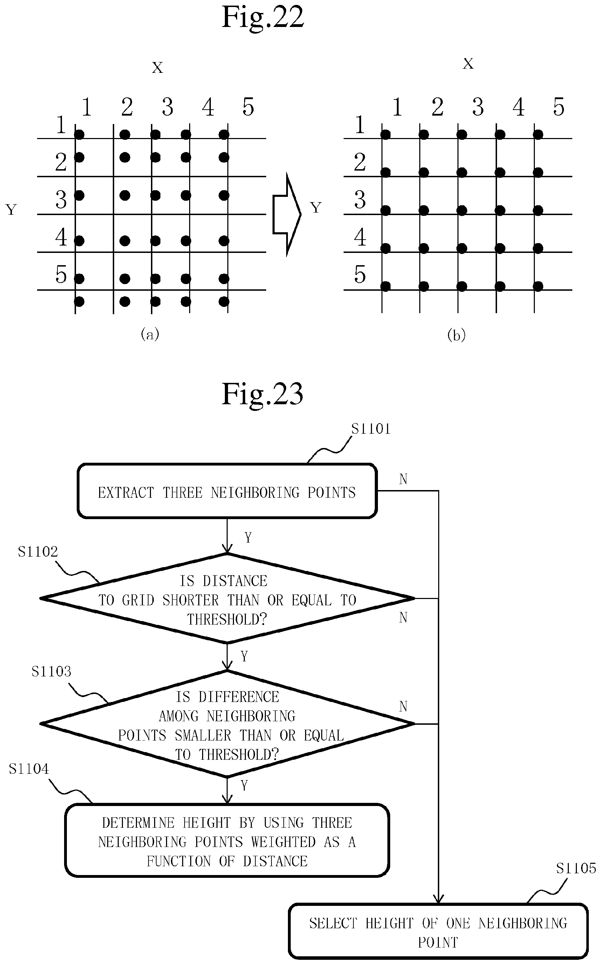

FIG. 22 is a set of explanatory diagrams of the processing that generates the reference three-dimensional point cloud data 1015 by the reference data generating part 1520 of the point cloud recognition processing unit 1250. A diagram (a) of FIG. 22 illustrates the point cloud of the three-dimensional coordinate point cloud data 1010 input from the laser point cloud three-dimensional rendering unit 1203. A diagram (b) of FIG. 22 illustrates the point cloud of the reference three-dimensional point cloud data 1015 generated by the reference data generating part 1520.

The three-dimensional coordinate point cloud data 1010 input from the laser point cloud three-dimensional rendering unit 1203 has a variation in the point density of the three-dimensional coordinate points included in the three-dimensional coordinate point cloud data 1010 depending on the distance from a measuring vehicle 1110 to a measurement point and the speed of the measuring vehicle 1110. When comparing coordinates in a plurality of pieces of the three-dimensional coordinate point cloud data 1010 measured at different times by the laser point cloud three-dimensional rendering unit 1203, variations occur among the coordinates to make the comparison processing complicated.

The reference data generating part 1520 thus forms a grid (hereinafter referred to as a reference grid) parallel to a horizontal plane (an XY plane) of the ENU coordinate system, compares the three-dimensional coordinate point cloud data 1010, and generates the reference three-dimensional point cloud data 1015.

Specifically, there is extracted the reference three-dimensional point cloud data 1015 in the vicinity of each of the three-dimensional coordinate points in the three-dimensional coordinate point cloud data 1010 input from the laser point cloud three-dimensional rendering unit 1203.

Next, a height coordinate H1 of each three-dimensional coordinate point (X0, Y0, H1) is left unchanged in the three-dimensional coordinate point cloud data 1010 measured by the laser point cloud three-dimensional rendering unit 1203 and illustrated in (a) of FIG. 22. Each three-dimensional coordinate point is then moved to a three-dimensional coordinate point on a lattice point represented by XY coordinates (such as (X1, Y1)) of a neighboring lattice point in the reference grid illustrated in (b) of FIG. 22. The three-dimensional coordinate point cloud data 1010 (such as a three-dimensional coordinate point (X1, Y1, H1)) on the lattice point after the movement is updated as the reference three-dimensional point cloud data 1015 representing a reference surface of the road surface.

The reference three-dimensional point cloud data 1015 is successively updated to the latest value as the three-dimensional coordinate point cloud data 1010 is input from the laser point cloud three-dimensional rendering unit 1203. Note that an initial value of the reference three-dimensional point cloud data 1015 is set in advance using data that is measured separately.

Next, the difference processing part 1510 moves each three-dimensional coordinate point $(X2, Y2, H2)$ of new three-dimensional coordinate point cloud data, which is newly measured by the laser point cloud three-dimensional rendering unit 1203 and illustrated in (a) of FIG. 22, to the XY coordinates (such as $X1, Y1$) of the neighboring lattice point as illustrated in (b) of FIG. 22. Note that the height $H2$ of the three-dimensional coordinate point of the lattice point in the reference grid is left unchanged in the reference three-dimensional point cloud data 1015 in the vicinity of the three-dimensional coordinate point. Then, the difference processing part 1510 performs lattice point alignment processing that represents the three-dimensional coordinate point in the new three-dimensional coordinate point cloud data by, for example, a three-dimensional coordinate point $(X1, Y1, H2)$ on the lattice point.

The three-dimensional coordinate point $(X1, Y1, H2)$ of the new three-dimensional coordinate point cloud data is a three-dimensional coordinate point moved to the lattice point $(X1, Y1)$ in the reference grid in the reference three-dimensional point cloud data 1015 in the vicinity of the new three-dimensional coordinate point cloud data that is newly measured.

The difference processing part 1510 compares a predetermined height reference $H0$ with a difference $Z2$ between the height $H2$ and the height $H1$ ($Z2 = H2 - HI$), the height $H2$ being the height of the three-dimensional coordinate point $(X1, Y1, H2)$ of the new three-dimensional coordinate point cloud data, and the height $H1$ being the height of the three-dimensional coordinate point cloud data of the lattice point in the reference grid in the reference three-dimensional point cloud data 1015 in the vicinity of the new three-dimensional coordinate point cloud data.

The difference processing part 1510 also sets the height $H2$ ($= Z2 + H1$) of the three-dimensional coordinate point of the new three-dimensional coordinate point cloud data as the height coordinate of each lattice point in the reference grid in the reference three-dimensional point cloud data 1015 in the vicinity of the new three-dimensional coordinate point cloud data. The difference processing part 1510 leaves unchanged the XY coordinates of the lattice point in the reference grid in the reference three-dimensional point cloud data 1015 in the vicinity of the new three-dimensional coordinate point cloud data. Then, the difference processing part 1510 performs lattice point alignment processing that calculates the differential three-dimensional point cloud coordinate data 1016 composed of a differential three-dimensional coordinate point $(X, Y, H2)$. The difference processing part 1510 outputs differential three-dimensional coordinate point cloud data.

Note that the difference processing part 1510 may also output the three-dimensional point cloud data of the lattice point in the reference grid in the reference three-dimensional point cloud data 1015 in the vicinity of the new three-dimensional coordinate point cloud data.

The recognition part 1530 colors the differential three-dimensional point cloud coordinate data 1016 by selecting color information corresponding to a difference between the height reference $H0$ and the height coordinate $Z$ of the differential three-dimensional point cloud coordinate data 1016 output from the difference processing part 1510. Where the height reference $H0 = n \times \Delta h$ ($n = -N, \cdots, -2, -1, 1, 2, \cdots, N$), for example, the color is changed every time the difference $Z2$ between the height coordinate $Z$ and the height reference $H0$ changes stepwise between $n-1$ and $n$. The color is changed as follows when $\Delta h = 5$ cm. The color is changed to a first color (such as yellow) when $Z2 = 0$ cm or more and less than 5 cm, a second color (such as red) when $Z2 = 5$ cm or more and less than 10 cm, and a third color (such as pink) when $Z2 = 10$ cm or more and less than 15 cm. The color is changed to a fourth color (such as blue) when $Z2 = -15$ cm or more and less than -10 cm, a fifth color (such as light blue) when $Z2 = -10$ cm or more and less than -5 cm, and a sixth color (such as yellowish green) when $Z2 = -5$ cm or more and less than 0 cm.

As with FIG. 14 of the second embodiment, the recognition part 1530 may find the difference between the reference height of the measuring vehicle 1110 and the height of each three-dimensional coordinate point of the three-dimensional coordinate point cloud data 1010 output from the laser point cloud three-dimensional rendering unit 1203, and select preset color information corresponding to the difference in height being found. The recognition part 1530 may then color the three-dimensional coordinate point and generate colored three-dimensional point cloud data. As a result, both the contour graph representing the road surface and the differential image can be displayed on the display 1300.

Each three-dimensional coordinate point outside the color coding range in the three-dimensional coordinate point cloud data 1010 may be assigned with gray scale color information based on the luminance data to generate colored three-dimensional point cloud data. For example, a position higher than the road surface by 15 cm or more and a position lower than the road surface by 15 cm or more may each be assigned with color information that is a shade of gray corresponding to the luminance data between black and white. At this time, the gray scale color information may be assigned to each three-dimensional coordinate point in the three-dimensional coordinate point cloud data 1010 outside the road range by recognizing the boundary line of the road or the roadside by some method.

The three-dimensional coordinate point cloud data 1010 representing the road surface is successively generated at every measurement time by the laser point cloud three-dimensional rendering unit 1203.

The recognition part 1530 generates the colored three-dimensional coordinate point cloud data 1011 by assigning the color information being selected to the three-dimensional coordinate and its luminance data of the three-dimensional coordinate point corresponding to each laser reflection point in the three-dimensional coordinate point cloud data 1010 that is generated successively. Then, the recognition part 1530 inputs the data being generated to the two-dimensional projection conversion processing unit 1204.

Next, the lattice point alignment processing performed by the reference data generating part 1520 and the difference processing part 1510 will be described. In the lattice point alignment processing, each three-dimensional coordinate point making up the three-dimensional coordinate point cloud data 1010 is represented by a neighboring lattice point which is a lattice point in the corresponding reference grid. Here, there will be described processing of selecting the height of the three-dimensional coordinate point represented by the lattice point in the target reference grid. FIG. 23 is a flowchart illustrating the lattice point alignment processing performed by the reference data generating part 1520 and the difference processing part 1510.

In step S1101 of FIG. 23, the reference data generating part 1520 and the difference processing part 1510 select three-dimensional coordinate points, which are to be three neighboring points of each lattice point in the reference grid, from the three-dimensional coordinate point cloud data 1010 output from the laser point cloud three-dimensional rendering unit 1203.

Next, it is determined in step S1102 whether the distance from each of the three-dimensional coordinate points selected from the three-dimensional coordinate point cloud data 1010 to the lattice point in the reference grid is shorter than or equal to a threshold (such as the length of one side of the lattice) and, if the determination is affirmative, the processing proceeds to step S1103. Each of the three-dimensional coordinate points selected from the three-dimensional coordinate point cloud data 1010 is a neighboring point of the lattice point in the corresponding reference grid.

The processing proceeds to step S1105 if it is determined that the distance to the lattice point in the reference grid is longer than the threshold (such as the length of one side of the lattice). Here, the distance to the lattice point in the reference grid is obtained from a square root of the sum of squares of the difference in XY coordinates.

Subsequently, the processing proceeds to step S1104 if it is determined in step S1103 that a difference in height among the three neighboring points of the lattice point in the corresponding reference grid is smaller than or equal to a threshold, the three neighboring points being the three-dimensional coordinate points selected from the three-dimensional coordinate point cloud data 1010. The processing proceeds to step S1105 if the difference in height among these neighboring points is larger than the threshold. Note that by setting the threshold used in this case to a height within a predetermined range from the road surface, the three-dimensional coordinate point assigned with the color information by the recognition part 1530 represents the road surface.

Next, in step S1104, a height Zave of the three-dimensional coordinate point represented by the lattice point in the reference grid is determined by weighting the distance from each of the three neighboring points of the lattice point in the corresponding reference grid selected from the three-dimensional coordinate point cloud data 1010 to the lattice point in the reference grid.

Where W1, W2, and W3 represent the heights of the three neighboring points and D1, D2, and D3 represent the horizontal distances from the lattice point in the reference grid to the neighboring points, the height Zave of the three-dimensional coordinate point of the lattice point is calculated by the following expression and weighted.

$$\text{Zave} = (1/D1 * Z1 + 1/D2 * Z2 + 1/D3 * Z3)/(1/D1 + 1/D2 + 1/D3)$$

If it is determined in step S1102 that the distance from one or two neighboring points among the three neighboring points selected from the three-dimensional coordinate point cloud data 1010 to the lattice point in the corresponding reference grid is longer than the threshold, it is selected in step S1105 the height of the neighboring point closest to the lattice point among the three neighboring points being selected as the height of the three-dimensional coordinate point on the lattice point.

Note that it is determined there is no three-dimensional coordinate point on the lattice point when the distances from the three neighboring points selected from the three-dimensional coordinate point cloud data 1010 to the lattice point in the corresponding reference grid are all longer than the threshold (such as the length of one side of the lattice).

Moreover, in step S1105, the height of one neighboring point closest to the lattice point in the reference grid is selected as the height of the three-dimensional coordinate point on the lattice point if it is determined in step S1103 that the difference in height among the neighboring points of the lattice point in the reference grid selected from the three-dimensional coordinate point cloud data 1010 is larger than the threshold (such as 5 cm).

As described above, the display system 1210 according to the third embodiment includes the laser point cloud three-dimensional rendering unit 1203, the point cloud recognition processing unit 1250, the control unit 1400, and the two-dimensional projection conversion processing unit 1204.

The laser point cloud three-dimensional rendering unit 1203 successively measures and outputs, as the three-dimensional coordinate point cloud data 1010, the three-dimensional position coordinate of the laser measurement point on the basis of the distance and direction information to the laser measurement point obtained by laser scanning on the surrounding object including the road surface, as well as the measured values of the position and attitude of a mobile body while the mobile body is on the move.

The point cloud recognition processing unit 1250 assigns the color information corresponding to the height from the road surface to the three-dimensional coordinate point cloud data 1010 that is successively output from the laser point cloud three-dimensional rendering unit 1203 while the mobile body is on the move.

The viewpoint information 1012 is input to the control unit 1400.

The two-dimensional projection conversion processing unit 1204 projects the three-dimensional position coordinate point in the three-dimensional coordinate point cloud data 1010, to which the color information is assigned by the point cloud recognition processing unit 1250, on the basis of the viewpoint information 1012 input on the control unit 1400 and the measured values of the position and attitude of the mobile body while the mobile body is on the move. The two-dimensional projection conversion processing unit 1204 then generates the point cloud image data 1013.

The point cloud recognition processing unit 1250 has as its feature to assign the color information corresponding to the difference in height between the three-dimensional coordinate point cloud data 1010 newly acquired by the laser point cloud three-dimensional rendering unit 1203 and the reference three-dimensional point cloud data 1015 representing a preset road surface shape.

This makes it possible to obtain a differential image from the reference three-dimensional point cloud data 1015 representing a shape model of the road surface acquired in the past by the three-dimensional coordinate point cloud data 1010, whereby it is easy to visually recognize the change in the road surface from the past.

The point cloud recognition processing unit 1250 as follows has been described in the third embodiment.

The point cloud recognition processing unit 1250 selects a plurality of three-dimensional coordinate points from each of the new three-dimensional coordinate point cloud data and the reference three-dimensional point cloud data for each lattice point in the reference grid. Next, the point cloud recognition processing unit 1250 determines the height of the lattice point for the new three-dimensional coordinate point cloud data by using the plurality of three-dimensional coordinate points selected from the new three-dimensional coordinate point cloud data. The point cloud recognition processing unit 1250 also determines the height of the lattice point for the reference three-dimensional point cloud data by using the plurality of three-dimensional coordinate points selected from the reference three-dimensional point cloud data. The point cloud recognition processing unit 1250 then assigns, to the three-dimensional coordinate point represented by the lattice point for the new three-dimensional coordinate point cloud data, the color information corresponding to the difference between the height of the lattice point for the new three-dimensional coordinate point cloud data and the height of the lattice point for the reference three-dimensional point cloud data.

The point cloud recognition processing unit 1250 weights the height of each of the plurality of three-dimensional coordinate points being selected in accordance with the distance in the horizontal direction from each of the three-dimensional coordinate points to the lattice point, when the distances in the horizontal direction from the plurality of three-dimensional coordinate points being selected to the lattice point are all shorter than or equal to the distance threshold, and at the same time the height differences among the plurality of three-dimensional coordinate points being selected are all smaller than or equal to the height threshold. Then, the point cloud recognition processing unit 1250 calculates the height of the lattice point by using the plurality of heights being weighted.

The point cloud recognition processing unit 1250 selects the three-dimensional coordinate point closest to the lattice point from among the plurality of three-dimensional coordinate points being selected, when at least one of the distances from the plurality of three-dimensional coordinate points being selected to the lattice point is shorter than or equal to the distance threshold, and at the same time at least one of the distances from the plurality of three-dimensional coordinate points being selected to the lattice point exceeds the distance threshold. Then, the point cloud recognition processing unit 1250 sets the height of the three-dimensional coordinate point being selected as the height of the lattice point.

The point cloud recognition processing unit 1250 selects the three-dimensional coordinate point closest to the lattice point from among the plurality of three-dimensional coordinate points being selected, when the distances from the plurality of three-dimensional coordinate points being selected to the lattice point are all shorter than or equal to the distance threshold, and at the same time at least one of the height differences among the plurality of three-dimensional coordinate points being selected exceeds the height threshold. Then, the point cloud recognition processing unit 1250 sets the height of the three-dimensional coordinate point being selected as the height of the lattice point.

Here, the technical field of the second and third embodiments will be described.

The second and third embodiments relate to the display system that is mounted on the mobile body, acquires the three-dimensional point cloud data representing the three-dimensional shapes of the road surface on which the mobile body travels as well as a feature around the mobile body and another mobile body, and displays the road surface condition on the basis of the three-dimensional point cloud data being acquired.

The background art of the second and third embodiments will now be described.

As a conventionally known system, a road surface property measurement system uses a mobile mapping system (MMS) to acquire three-dimensional point cloud data which is a set of measurement points on a paved road surface on which a vehicle travels, and measure irregularities of the paved road surface by using the three-dimensional point cloud data being acquired. The MMS includes a vehicle equipped with a self position and attitude locator and a laser. The self position and attitude locator is a global positioning system (GPS), an IMU, or the like.

The MMS can perform high precision measurement in an environment with a visible GPS satellite. Moreover, the use of positioning reinforcement information allows real-time display of the three-dimensional point cloud data acquired during travel.

Patent Literature 2 discloses a road surface property measurement system and a display system, for example. The road surface property measurement system includes a reference line setting unit, a reference area setting unit, a reference road surface model creating unit, a measured road surface model creating unit, and a difference extracting unit, and detects irregularities of the paved road surface on the basis of a difference. The display system displays the degree of the irregularities.

The road surface property measurement system acquires a reference road surface model and a measured road surface model, and then superimposes the two to extract the difference therebetween. The road surface property measurement system treats the reference road surface model as a standard, and extracts a site with a difference in height between the reference road surface model and the measured road surface model as the difference. The difference being extracted is represented by a contour diagram (contour map) according to the degree of the difference, or a color gradient map colored according to the degree of the difference. These maps are checked to detect the irregularities on the road surface such as rutting. Moreover, the difference may be compared with a threshold to be able to automatically detect rutting or harmful irregularities.

The problem to be solved by the second and third embodiments will now be described.

The conventional road surface property measurement system does not display the degree of the irregularities on the road surface by using the contour map, the color gradient map, or the like while a mobile body is on the move. It is thus impossible to visually recognize the road surface condition that changes every moment with the movement of the mobile body while the mobile body is on the move.

In a regular inspection on the road surface, for example, a measuring vehicle being the mobile body regularly travels on the road to measure the road surface condition while an inspector performs a visual check of the road surface. Measured data obtained by the measuring vehicle is stored in a hard disk so that the inspector takes the hard disk back to a measurement office and analyzes the data. It is thus impossible to instantly check the degree of the irregularities on the road surface while the mobile body is on the move. Moreover, when the inspector overlooks a deformation on the road surface, he is unable to deal with the occurrence of some deformation on the road surface or an obstacle on the road surface without delay.

The second and third embodiments have been made in order to solve such a problem, and aim at displaying the road surface condition changing every moment as the mobile body moves in a state that is easily viewed while the mobile body is on the move.

Solutions to the problem according to the second and third embodiments will now be described.

The display system includes the laser point cloud three-dimensional rendering unit, the point cloud recognition processing unit, the control unit, and the two-dimensional projection conversion processing unit.

The laser point cloud three-dimensional rendering unit successively measures and outputs, as the three-dimensional coordinate point cloud data, the three-dimensional position coordinate of the laser measurement point on the basis of the distance and direction information to the laser measurement point obtained by laser scanning on a surrounding object including the road surface, as well as the measured values of the position and attitude of the mobile body while the mobile body is on the move.

The point cloud recognition processing unit assigns the color information corresponding to the height from the road surface to the three-dimensional coordinate point cloud data that is successively output from the laser point cloud three-dimensional rendering unit while the mobile body is on the move.

The viewpoint information is input to the control unit.

While the mobile body is on the move, the two-dimensional projection conversion processing unit projects the three-dimensional position coordinate point in the three-dimensional coordinate point cloud data, to which the color information is assigned by the point cloud recognition processing unit, on the basis of the viewpoint information input on the control unit and the measured values of the position and attitude of the mobile body, thereby generating the point cloud image data.

Effects of the second and third embodiments will now be described.

The second and third embodiments can display the contour-like point cloud graph (the color gradient map or contour map expressed by the point clouds) corresponding to the height of the road surface and at the same time change the viewpoint for viewing the road surface while the mobile body is on the move. It is thus possible to display the road surface condition in a state that is easily grasped visually while the road surface condition changes every moment as the mobile body moves.

The correspondence between the components described in the second and third embodiments and the components described in the first embodiment will be described below. Components corresponding to each other have at least some common part. Each component may be replaced with the corresponding component if no inconsistency occurs by the replacement, and the name of each component may be replaced with the name of the corresponding component.

The measuring vehicle 1110 corresponds to the measuring vehicle 110. The positioning reinforcement signal receiving unit 1101, the GNSS receiver 1102, the IMU 1103, and the odometry unit 1104 correspond to the positioning reinforcement signal receiver 111, the positioning signal receiver 112, the inertial measurement unit 113, and the odometer 114, respectively.

The display system 1210 corresponds to the point cloud image generator 100, and includes hardware similar to that of the point cloud image generator 100.

The measured data processing section 1200 corresponds to the measured data processing section 200. The position-attitude measurement unit 1206 corresponds to the position calculation unit 121 and the attitude calculation unit 122. The self position calculation unit 1201, the attitude calculation unit 1202, and the laser point cloud three-dimensional rendering unit 1203 correspond to the position calculation unit 121, the attitude calculation unit 122, and the three-dimensional point cloud generating unit 123, respectively. The self position setting unit 1205 and the two-dimensional projection conversion processing unit 1204 correspond to the position estimation unit 220 and the two-dimensional projection unit 230, respectively.

The display 1300 and the control unit 1400 correspond to the display 300 and the control unit 400, respectively.

The three-dimensional coordinate point cloud 1501, the self position mark 1504, and the estimated self position mark 1505 correspond to the three-dimensional point cloud 311, the measurement position mark 312, and the estimated position mark 313, respectively. The self position and the estimated self position correspond to the measurement position and the estimated position, respectively.

The three-dimensional coordinate point cloud data 1010 and the colored three-dimensional coordinate point cloud data 1011 correspond to the three-dimensional point cloud data 203. The point cloud image data 1013 corresponds to the projected point cloud data 235.

The display example of the control unit 1400 corresponds to the interface image 320. The forward view selection button 1601, the backward view selection button 1602, the rightward view selection button 1603, the leftward view selection button 1604, and the downward view selection button 1605 correspond to the forward button 321F, the backward button 321B, the right button 321R, the left button 321L, and the downward button 321D, respectively. The offset value 1606 corresponds to the left-right widget 322X, the front-back widget 322Y, and the up-down widget 322Z. The offset value 1607 corresponds to the angle-of-elevation widget 323P and the angle-of-bearing widget 323Y The clear button 1608 corresponds to the clear button 329.

Fourth Embodiment

A method of determining a viewpoint position of a point cloud image 310 will be described with reference to FIGS. 4, 24 and 25. Note that a description overlapping with that in the first embodiment will be omitted.

Description of configuration

The configuration of the point cloud image generator 100 is the same as that of the first embodiment.

The two-dimensional projection unit 230 of the point cloud image generator 100 determines the viewpoint position with a base point set to either a measurement position being the position of the measuring vehicle 110 when the laser scanner 115 performs measurement or an estimated position being the position of the measuring vehicle 110 when the point cloud image 310 is displayed. Then, the two-dimensional projection unit 230 performs two-dimensional projection processing on the basis of the viewpoint position being determined. The two-dimensional projection processing generates the projected point cloud data 235 which is the data of the point cloud image 310.

Description of operation

As a method of determining the viewpoint position by the two-dimensional projection unit 230, <Example 1> to <Example 3> will be described.

A vector from the vehicle position 401 to the reference viewpoint position 411 in FIG. 4 described in the first embodiment is referred to as a reference offset amount. The reference offset amount includes a distance Dx in the left-right direction of the measuring vehicle 110, a distance Dy in the front-back direction of the measuring vehicle 110, and a distance Dz in the vertical direction of the measuring vehicle 110. Specifically, the distance Dx is zero, the distance Dy is a negative value, and the distance Dz is a positive value. In other words, the reference viewpoint position 411 is a point located obliquely above the back of the vehicle position 401. The reference offset amount is predetermined.

Example 1

The two-dimensional projection unit 230 determines the viewpoint position with the measurement position as the base point. That is, the vehicle position 401 illustrated in FIG. 4 is the measurement position.
Specifically, the two-dimensional projection unit 230 determines the viewpoint position as follows.
The two-dimensional projection unit 230 first calculates a coordinate value of the reference viewpoint position 411 by adding the reference offset amount to a coordinate value of the measurement position indicated by the measurement position data 201.
The two-dimensional projection unit 230 then calculates a coordinate value of the viewpoint position by adding the offset amount indicated by the control data 204 to the coordinate value of the reference viewpoint position 411.

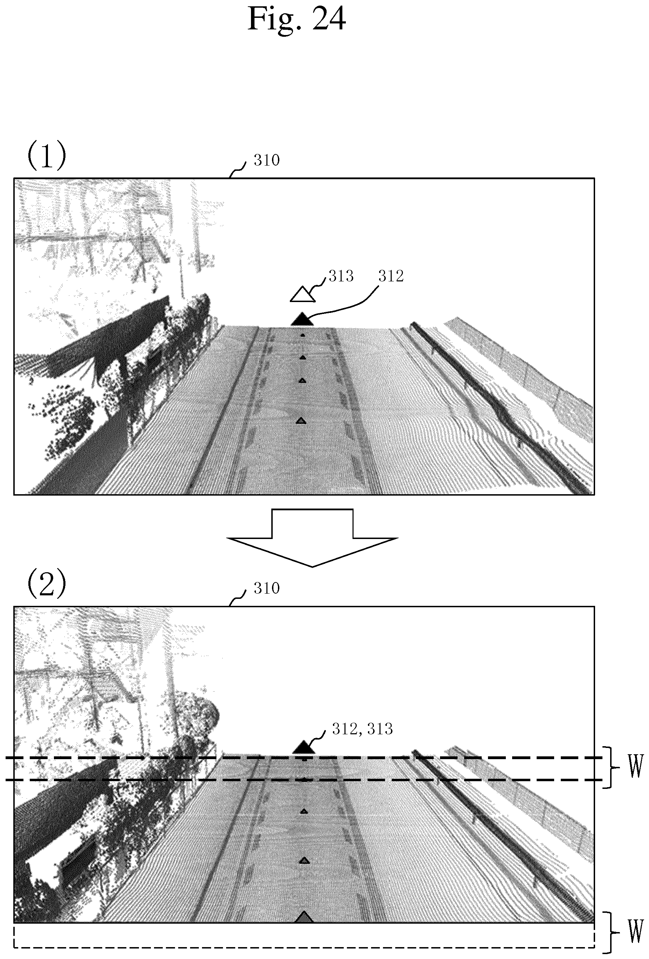

FIG. 24 illustrates a change in the point cloud image 310 when the viewpoint position is determined with the measurement position as the base point. A view (1) illustrates the point cloud image 310 when the measuring vehicle 110 comes to a stop, and a view (2) illustrates the point cloud image 310 when a delay time elapses after the measuring vehicle 110 comes to a stop. The delay time is the time from when the laser scanner 115 performs measurement to when the point cloud image 310 including the point cloud obtained by the measurement is displayed. In the view (2), the measurement position mark 312 overlaps with the estimated position mark 313.
As illustrated in FIG. 24, the point cloud is added to the front with the viewpoint position moving forward until the delay time elapses after the measuring vehicle 110 comes to a stop. As a result, even after the measuring vehicle 110 comes to a stop, the point cloud image 310 in which the road and its surroundings are drawn scrolls forward until the delay time elapses. The point cloud image 310 in the view (2) is an image scrolled forward by a width W after the measuring vehicle 110 comes to a stop.

Example 2

The two-dimensional projection unit 230 determines the viewpoint position with the estimated position as the base point. That is, the vehicle position 401 illustrated in FIG. 4 is the estimated position.
Specifically, the two-dimensional projection unit 230 determines the viewpoint position as follows.
The two-dimensional projection unit 230 first calculates the coordinate value of the reference viewpoint position 411 by adding the reference offset amount to a coordinate value of the estimated position indicated by the estimated position data 229.
The two-dimensional projection unit 230 then calculates the coordinate value of the viewpoint position by adding the offset amount indicated by the control data 204 to the coordinate value of the reference viewpoint position 411.

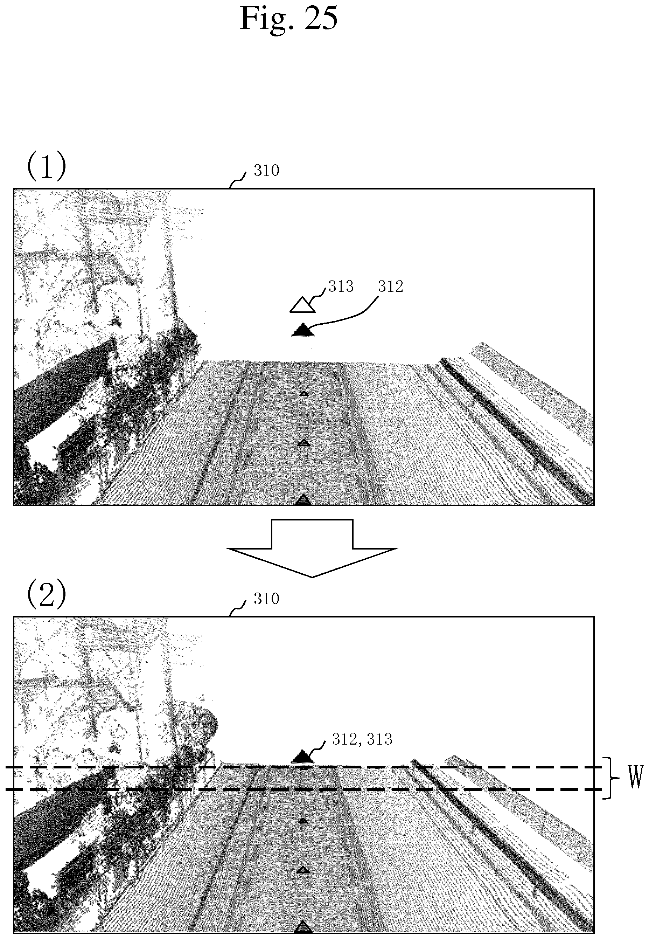

FIG. 25 illustrates a change in the point cloud image 310 when the viewpoint position is determined with the estimated position as the base point. A view (1) illustrates the point cloud image 310 when the measuring vehicle 110 comes to a stop, and a view (2) illustrates the point cloud image 310 when a delay time elapses after the measuring vehicle 110 comes to a stop. In the view (2), the measurement position mark 312 overlaps with the estimated position mark 313.
As illustrated in FIG. 25, the point cloud is added to the front with the viewpoint position unchanged until the delay time elapses after the measuring vehicle 110 comes to a stop. As a result, the scrolling of the point cloud image 310 in which the road and its surroundings are drawn stops when the measuring vehicle 110 comes to a stop. The point cloud is then added to the front until the delay time elapses. The point cloud image 310 in the view (2) is an image in which the point cloud is added to the front by the width W after the measuring vehicle 110 comes to a stop.

Example 3

The two-dimensional projection unit 230 selects either the measurement position or the estimated position as a function of the speed of the measuring vehicle 110, and determines the viewpoint position with the selected position as the base point. That is, the vehicle position 401 illustrated in FIG. 4 is the measurement position or the estimated position.
Specifically, the two-dimensional projection unit 230 determines the viewpoint position as follows.
The two-dimensional projection unit 230 acquires the speed of the measuring vehicle 110 from the measuring vehicle 110 every time the three-dimensional point cloud data 203 is input.
Next, the two-dimensional projection unit 230 compares the speed of the measuring vehicle 110 with a speed threshold. The two-dimensional projection unit 230 selects the measurement position as the base point when the speed of the measuring vehicle 110 is faster than or equal to the speed threshold. The two-dimensional projection unit 230 selects the estimated position as the base point when the speed of the measuring vehicle 110 is slower than the speed threshold. That is, the two-dimensional projection unit 230 selects the measurement position as the base point while the measuring vehicle 110 travels at a sufficiently high speed, and switches the base point to the estimated position when the measuring vehicle 110 is about to stop.

Next, the two-dimensional projection unit 230 calculates the coordinate value of the reference viewpoint position 411 by adding the reference offset amount to a coordinate value of the base point.

The two-dimensional projection unit 230 then calculates a coordinate value of the viewpoint position by adding the offset amount indicated by the control data 204 to the coordinate value of the reference viewpoint position 411.

The viewpoint position is determined with the estimated position as the base point when the measuring vehicle 110 comes to a stop, so that the point cloud image 310 after the measuring vehicle 110 comes to a stop changes as illustrated in FIG. 25.

Effect of Embodiment

In the case of Example 1, the point cloud image 310 scrolls forward until the delay time elapses even after the measuring vehicle 110 comes to a stop. This may possibly give a sense of strangeness to an operator who checks the point cloud image 310 while on board the measuring vehicle 110.

On the other hand, in the case of Example 2 or Example 3, the scrolling of the point cloud image 310 stops when the measuring vehicle 110 comes to a stop so that the operator does not feel any strangeness.

Fifth Embodiment

There will be described another example of the user interface for changing the viewpoint position and the gaze direction of a point cloud image 310. Note that a description overlapping with that in the first embodiment will be omitted.

A display 300 includes a touch panel operated by a user as the user interface.

The viewpoint position and the gaze direction of the point cloud image 310 are changed by an operation on the touch panel.

The user can change the viewpoint position and the gaze direction of the point cloud image 310 by operating the touch panel or operating an interface image 320.

The gaze direction is changed as follows by flicking or tapping which is a type of operation performed on the touch panel.

When the touch panel is flicked from the bottom to the top, a control unit 400 changes the gaze direction to the direction of travel of a measuring vehicle 110 as is the case where a forward button 321F is pressed.

When the touch panel is flicked from the top to the bottom, the control unit 400 changes the gaze direction to a direction opposite to the direction of travel of the measuring vehicle 110, as is the case where a backward button 321B is pressed.

When the touch panel is flicked from the right to the left, the control unit 400 changes the gaze direction to the left with respect to the direction of travel of the measuring vehicle 110, as is the case where a left button 321L is pressed.

When the touch panel is flicked from the left to the right, the control unit 400 changes the gaze direction to the right with respect to the direction of travel of the measuring vehicle 110, as is the case where a right button 321R is pressed.

When the touch panel is tapped, the control unit 400 changes the gaze direction downward as is the case where a downward button 321D is pressed.

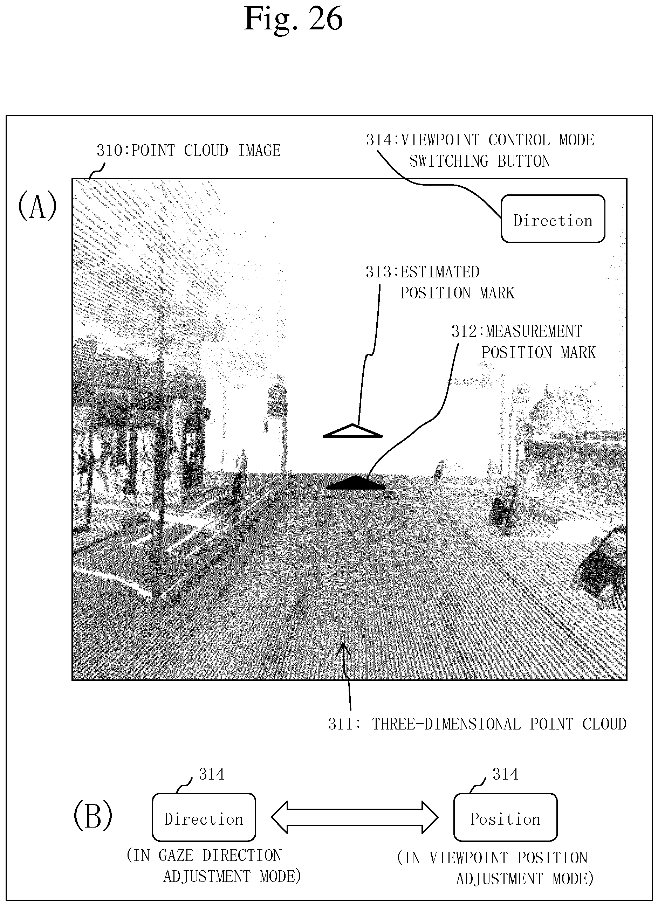

In a view (A) of FIG. 26, a viewpoint control mode switching button 314 is a button displayed in overlay on a screen on which the point cloud image 310 is displayed in order to switch modes between a gaze direction adjustment mode and a viewpoint position adjustment mode.

The gaze direction adjustment mode is a mode in which the gaze direction can be adjusted by operating the touch panel.

The viewpoint position adjustment mode is a mode in which the viewpoint position can be adjusted by operating the touch panel.

As illustrated in (B) of FIG. 26, "Direction" is displayed on the face of the viewpoint control mode switching button 314 in the gaze direction adjustment mode. The gaze direction is then changed as follows by dragging on the screen on which the point cloud image 310 is displayed. Dragging is a type of operation performed on the touch panel.

When an upward drag operation is performed, the control unit 400 rotates the gaze direction upward with respect to the direction of travel of the measuring vehicle 110, as is the case where the numerical value of an angle-of-elevation widget 323P on the interface image 320 is increased. The amount of rotation is proportional to the amount being dragged.

When a downward drag operation is performed, the control unit 400 rotates the gaze direction downward with respect to the direction of travel of the measuring vehicle 110, as is the case where the numerical value of the angle-of-elevation widget 323P on the interface image 320 is decreased. The amount of rotation is proportional to the amount being dragged.

When a rightward drag operation is performed, the control unit 400 rotates the gaze direction to the right with respect to the direction of travel of the measuring vehicle 110, as is the case where the numerical value of an angle-of-bearing widget 323Y on the interface image 320 is increased. The amount of rotation is proportional to the amount being dragged.

When a leftward drag operation is performed, the control unit 400 rotates the gaze direction to the left with respect to the direction of travel of the measuring vehicle 110, as is the case where the numerical value of the angle-of-bearing widget 323Y on the interface image 320 is decreased. The amount of rotation is proportional to the amount being dragged.

As illustrated in (B) of FIG. 26, "Position" is displayed on the face of the viewpoint control mode switching button 314 in the viewpoint position adjustment mode. The viewpoint position is then changed as follows by dragging on the screen on which the point cloud image 310 is displayed.

When an upward drag operation is performed, the control unit 400 shifts the viewpoint position upward with respect to the direction of travel of the measuring vehicle 110, as is the case where the numerical value of an up-down widget 322Z on the interface image 320 is increased. The amount of shift is proportional to the amount being dragged.

When an downward drag operation is performed, the control unit 400 shifts the viewpoint position downward with respect to the direction of travel of the measuring vehicle 110, as is the case where the numerical value of the up-down widget 322Z on the interface image 320 is decreased. The amount of shift is proportional to the amount being dragged.

When a rightward drag operation is performed, the control unit 400 shifts the viewpoint position to the right with respect to the direction of travel of the measuring vehicle 110, as is the case where the numerical value of a left-right widget 322X on the interface image 320 is increased. The amount of shift is proportional to the amount being dragged.

When a leftward drag operation is performed, the control unit 400 shifts the viewpoint position to the left with respect to the direction of travel of the measuring vehicle 110, as is the case where the numerical value of the left-right widget 322X on the interface image 320 is decreased. The amount of shift is proportional to the amount being dragged.

In the viewpoint position adjustment mode, the viewpoint position is changed as follows by pinching in or pinching out on the screen on which the point cloud image 310 is displayed. Pinching in and pinching out are each a type of operation performed on the touch panel. Pinching in and pinching out are collectively called pinching.

When a pinch in operation is performed, the control unit 400 shifts the viewpoint position forward with respect to the direction of travel of the measuring vehicle 110, as is the case where the numerical value of a front-back widget 322Y on the interface image 320 is increased. The amount of shift is proportional to the amount being pinched in.

When a pinch out operation is performed, the control unit 400 shifts the viewpoint position backward with respect to the direction of travel of the measuring vehicle 110, as is the case where the numerical value of the front-back widget 322Y on the interface image 320 is decreased. The amount of shift is proportional to the amount being pinched out.

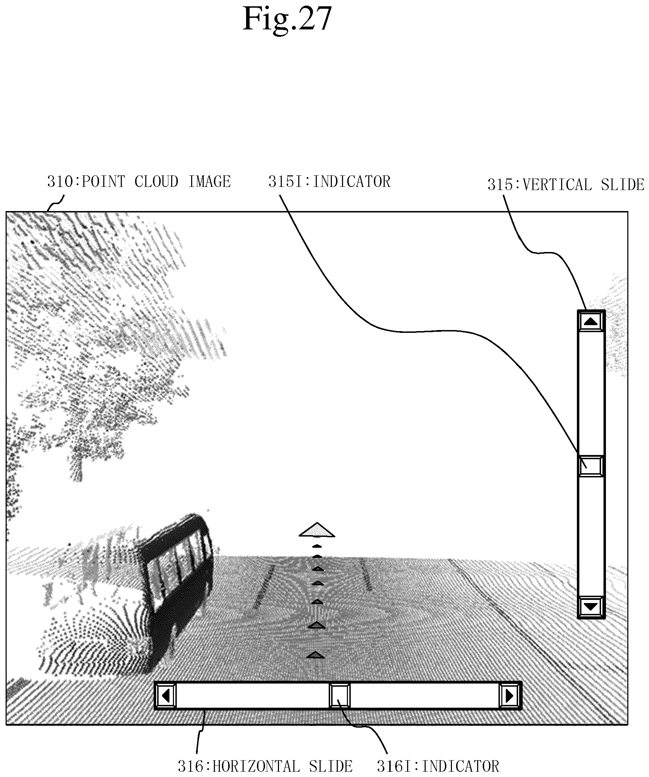

A vertical slide 315 and a horizontal slide 316 illustrated in FIG. 27 are slides displayed in overlay on the screen on which the point cloud image 310 is displayed in order to change the gaze direction. An indicator 3151 on the vertical slide 315 and an indicator 3161 on the horizontal slide 316 can be moved independently of each other.

The gaze direction is changed as follows by sliding which is a type of operation performed on the touch panel.

When the indicator 3151 on the vertical slide 315 is moved vertically or when the indicator 3161 on the horizontal slide 316 is moved horizontally, the control unit 400 rotates the gaze direction in a direction in which the indicator (3151 or 3161) is moved. The amount of rotation is proportional to the amount of sliding of the indicator.

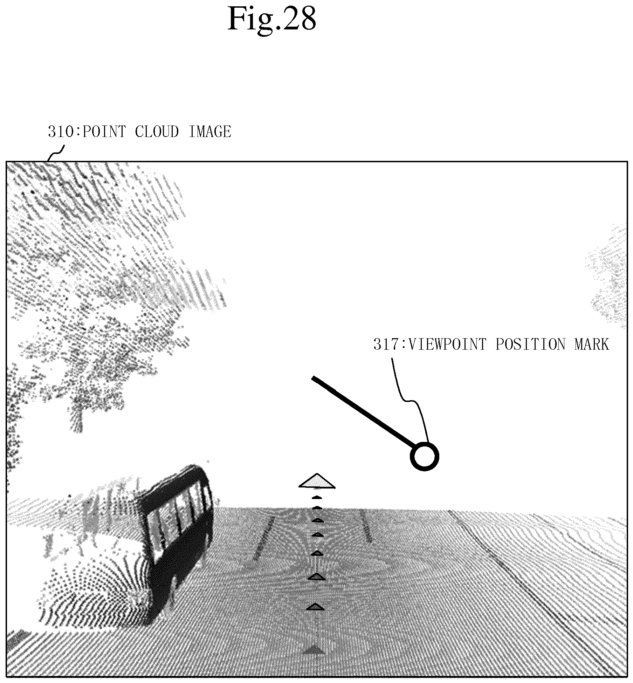

A viewpoint position mark 317 in FIG. 28 is a mark displayed in overlay on the screen on which the point cloud image 310 is displayed in order to change the viewpoint position. A circle of the viewpoint position mark 317 represents the viewpoint position, and a tip opposite to the circle represents the center of the viewpoint.

The viewpoint position is changed as follows by dragging which is a type of operation performed on the touch panel.

When the viewpoint position mark 317 is dragged, the control unit 400 shifts the viewpoint position in a direction in which the viewpoint position mark 317 is dragged. The amount of shift is proportional to the amount by which the viewpoint position mark 317 is dragged.

Note that the viewpoint position mark 317 is shifted to a drop destination when dragged. As a result, the drop destination becomes a new viewpoint position so that the display of the point cloud image 310 is switched.

The plurality of methods for changing the gaze direction or the viewpoint position described with reference to FIGS. 26, 27, and 28 may be implemented independently or in combination.

Specifically, the gaze direction may be changed by implementing either the method of FIG. 26 or the method of FIG. 27, or both of the methods.

The viewpoint position may be changed by implementing either the method of FIG. 26 or the method of FIG. 28, or both of methods.

Moreover, the gaze direction and the viewpoint position may be changed by implementing the method of FIG.

27 and the method of FIG. 28, or additionally implementing the method of FIG. 26.

When a plurality of methods is implemented, any two or more of the viewpoint control mode switching button 314, the slides (315 and 316), and the viewpoint position marks 317 are superimposed and displayed on the point cloud image 310. Note that the methods of FIGS. 26, 27, and 28 may be switched by pressing the viewpoint control mode switching button 314 or a different switching button.

Supplement to embodiment

The aforementioned embodiments are examples of preferred modes and are not intended to limit the technical scope of the present invention that is defined by the appended claims.

The processing procedure described by using the flowchart or the like is an example of a processing procedure for the point cloud image generator, the point cloud image generating method, and the point cloud image generating program, or a processing procedure for the display system, the display method, and the display program.

List of Reference Signs

| | |
|---|---|
| 100: | point cloud image generator |
| 101: | positioning reinforcement data |
| 102: | positioning data |
| 103: | inertial measurement data |
| 104: | travel distance data |
| 105: | bearing-distance data |
| 110: | measuring vehicle |
| 111: | positioning reinforcement signal receiver |
| 112: | positioning signal receiver |
| 113: | inertial measurement unit |
| 114: | odometer |
| 115: | laser scanner |
| 119: | top panel |
| 121: | position calculation unit |
| 122: | attitude calculation unit |
| 123: | three-dimensional point cloud generating unit |
| 200: | measured data processing section |
| 201: | measurement position data |
| 202: | measurement attitude data |
| 203: | three-dimensional point cloud data |
| 204: | control data |
| 220: | position estimation unit |
| 229: | estimated position data |
| 230: | two-dimensional projection unit |
| 235: | projected point cloud data |
| 236: | projected mark data |
| 300: | display |
| 310: | point cloud image |
| 311: | three-dimensional point cloud |
| 312: | measurement position mark |
| 313: | estimated position mark |
| 314: | viewpoint control mode switching button |
| 315: | vertical slide |
| 3151: | indicator |
| 316: | horizontal slide |
| 3161: | indicator |
| 317: | viewpoint position mark |
| 320: | interface image |
| 321B: | backward button |
| 321D: | downward button |

| | |
|---|---|
| 321F: | forward button |
| 321L: | left button |
| 321R: | right button |
| 322X: | left-right widget |
| 322Y: | front-back widget |
| 322Z: | up-down widget |
| 323P: | angle-of-elevation widget |
| 323Y: | angle-of-bearing widget |
| 329: | clear button |
| 400: | control unit |
| 401: | vehicle position |
| 411: | reference viewpoint position |
| 901: | processor |
| 902: | auxiliary storage |
| 903: | memory |
| 904: | communication unit |
| 9041: | receiver |
| 9042: | transmitter |
| 905: | input interface |
| 906: | output interface |
| 907: | input unit |
| 908: | output unit |
| 910: | signal line |
| 911: | cable |
| 912: | cable |
| 1001: | positioning reinforcement data |
| 1002: | positioning data |
| 1003: | angular velocity data |
| 1004: | travel distance data |
| 1005: | distance-direction data |
| 1006: | acceleration data |
| 1007: | self position data |
| 1008: | attitude data |
| 1009: | estimated self position data |
| 1010: | three-dimensional coordinate point cloud data |
| 1011: | colored three-dimensional coordinate point cloud data |
| 1012: | viewpoint information |
| 1013: | point cloud image data |
| 1014: | mark data |
| 1015: | reference three-dimensional point cloud data |
| 1016: | differential three-dimensional point cloud coordinate data |
| 1100: | measuring section |
| 1101: | positioning reinforcement signal receiving unit |
| 1102: | GNSS receiver |
| 1103: | IMU |
| 1104: | odometry unit |
| 1105: | laser scanner |
| 1110: | measuring vehicle |
| 1200: | measured data processing section |
| 1201: | self position calculation unit |
| 1202: | attitude calculation unit |
| 1203: | laser point cloud three-dimensional rendering unit |
| 1204: | two-dimensional projection conversion processing unit |
| 1205: | self position setting unit |
| 1206: | position-attitude measurement unit |
| 1210: | display system |
| 1250: | point cloud recognition processing unit |
| 1300: | display |

1400:     control unit
1501:     three-dimensional coordinate point cloud
1502:     feature
1503:     road surface
1504:     self position mark
1505:     estimated self position mark
1506:     path mark
1509:     contour graph
1510:     difference processing part
1520:     reference data generating part
1530:     recognition part
1601:     forward view selection button
1602:     backward view selection button
1603:     rightward view selection button
1604:     leftward view selection button
1605:     downward view selection button
1606:     offset value
1607:     offset value
1608:     clear button
1609:     elf position
1610:     estimated self position

**Claims**

1.  A point cloud image generator (100) comprising: a three-dimensional point cloud generating unit (123) to generate three-dimensional point cloud data on the basis of a measured value at each of a plurality of irradiation points, the three-dimensional point cloud data being a piece of data representing a three-dimensional coordinate value of each of the plurality of irradiation points, and the measured value being obtained by irradiating a surrounding object with a laser from a laser scanner mounted on a measuring vehicle and measuring a bearing and a distance to each of the plurality of irradiation points; and a two-dimensional projection unit (230) to perform two-dimensional projection processing on the three-dimensional point cloud data on the basis of a viewpoint position and a gaze direction, and generate a point cloud image, wherein the point cloud image includes a measurement position mark (312) representing a position of the measuring vehicle at the time of measurement **characterized by** a position estimation unit (220) to estimate a three-dimensional coordinate value of an estimated position, which is a position of the measuring vehicle when the point cloud image is displayed, by using measurement position data representing a three-dimensional coordinate value of the measuring vehicle at the time of measurement, and generate estimated position data representing the three-dimensional coordinate value being estimated, wherein the two-dimensional projection unit (230) performs the two-dimensional projection processing on an estimated position mark (313) representing the estimated position by using the estimated position data being generated, and generates an image including a three-dimensional point cloud, the measurement position mark (312), and the estimated position mark (313) as the point cloud image.

2.  The point cloud image generator (100) according to claim 1,
    wherein the gaze direction is changed by a user interface (320), and the two-dimensional projection unit (230) performs the two-dimensional projection processing on the measurement position mark (312) in a mode where the mark is viewed from the gaze direction.

3.  4. The point cloud image generator (100) according to any one of claims 1 to 2, wherein a three-dimensional point making up the three-dimensional point cloud included in the point cloud image has a triangular shape.

4.  The point cloud image generator (100) according to any one of claims 1 to 3, wherein the two-dimensional projection unit (230) determines the viewpoint position with a measurement position as a base point, the measurement position being a position of the measuring vehicle when the laser scanner performs measurement.

5.  The point cloud image generator (100) according to any one of claims 1 to 3, wherein the two-dimensional projection unit (230) determines the viewpoint position with an estimated position as a base point, the estimated position being a position of the measuring vehicle when the point cloud image is displayed.

**6.** The point cloud image generator (100) according to any one of claims 1 to 3, wherein the two-dimensional projection unit (230) selects, as a function of speed of the measuring vehicle, either a measurement position which is a position of the measuring vehicle when the laser scanner performs measurement or the estimated position which is the position of the measuring vehicle when the point cloud image is displayed, and determines the viewpoint position with the position being selected as a base point.

**Patentansprüche**

**1.** Punktwolkenbildgenerator (100), der Folgendes aufweist:

- eine Erzeugungseinrichtung (123) für dreidimensionale Punktwolken, um dreidimensionale Punktwolkendaten auf der Grundlage eines Messwertes an jedem einer Vielzahl von Bestrahlungspunkten zu erzeugen, wobei die dreidimensionalen Punktwolkendaten eine Dateneinheit bilden, die einen dreidimensionalen Koordinatenwert von jedem von der Vielzahl von Bestrahlungspunkten darstellt, und wobei der Messwert durch Bestrahlen eines umliegenden Objekts mit einem Laser von einem Laserscanner, der auf einem Messfahrzeug montiert ist, und Messen einer Lage und eines Abstands zu jedem von der Vielzahl von Bestrahlungspunkten erhalten wird; und
- eine zweidimensionale Projektionseinheit (230) zum Durchführen einer zweidimensionalen Projektionsverarbeitung der dreidimensionalen Punktwolkendaten auf der Grundlage einer Blickpunktposition und einer Blickrichtung, und zum Erzeugen eines Punktwolkenbildes, wobei das Punktwolkenbild eine Messpositionsmarkierung (312) enthält, die eine Position des Messfahrzeugs zum Zeitpunkt der Messung darstellt,
**gekennzeichnet durch**
eine Positionsschätzeinrichtung (220) zum Schätzen eines dreidimensionalen Koordinatenwerts einer Schätzposition, die eine Position des Messfahrzeugs ist, wenn das Punktwolkenbild angezeigt wird, und zwar unter Verwendung von Messpositionsdaten, die einen dreidimensionalen Koordinatenwert des Messfahrzeugs zum Zeitpunkt der Messung darstellen, und zum Erzeugen von Schätzpositionsdaten, die den geschätzten dreidimensionalen Koordinatenwert darstellen, wobei die zweidimensionale Projektionseinheit (230) die zweidimensionale Projektionsverarbeitung an einer Schätzpositionsmarkierung (313) durchführt, die die Schätzposition unter Verwendung der erzeugten Schätzpositionsdaten darstellt, und ein Bild als Punktwolkenbild erzeugt, das eine dreidimensionale Punktwolke, die Messpositionsmarkierung (312) und die Schätzpositionsmarkierung (313) enthält.

**2.** Punktwolkenbildgenerator (100) nach Anspruch 1,
wobei die Blickrichtung durch eine Benutzerschnittstelle (320) geändert wird, und
wobei die zweidimensionale Projektionseinheit (230) die zweidimensionale Projektionsverarbeitung von der Messpositionsmarkierung (312) in einem Modus durchführt, in dem die Markierung aus der Blickrichtung betrachtet wird.

**3.** Punktwolkenbildgenerator (100) nach einem der Ansprüche 1 bis 2,
wobei ein dreidimensionaler Punkt, der die dreidimensionale Punktwolke bildet, die in dem Punktwolkenbild enthalten ist, eine dreieckige Form aufweist.

**4.** Punktwolkenbildgenerator (100) nach einem der Ansprüche 1 bis 3,
wobei die zweidimensionale Projektionseinheit (230) die Blickpunktposition mit einer Messposition als Basispunkt bestimmt,
wobei die Messposition eine Position des Messfahrzeugs ist, wenn der Laserscanner die Messung durchführt.

**5.** Punktwolkenbildgenerator (100) nach einem der Ansprüche 1 bis 3,
wobei die zweidimensionale Projektionseinheit (230) die Blickpunktposition mit einer Schätzposition als Basispunkt bestimmt,
wobei die Schätzposition eine Position des Messfahrzeugs ist, wenn das Punktwolkenbild angezeigt wird.

**6.** Punktwolkenbildgenerator (100) nach einem der Ansprüche 1 bis 3,
wobei die zweidimensionale Projektionseinheit (230) in Abhängigkeit von der Geschwindigkeit des Messfahrzeugs entweder eine Messposition, die eine Position des Messfahrzeugs ist, wenn der Laserscanner eine Messung durchführt, oder die Schätzposition, die die Position des Messfahrzeugs ist, wenn das Punktwolkenbild angezeigt wird, auswählt, und die Blickpunktposition bestimmt, wobei die Position als ein Basispunkt ausgewählt wird.

**Revendications**

1.  Générateur d'image de nuage de points (100) comprenant une unité de génération de nuage de points tridimensionnel (123) pour générer des données de nuage de points tridimensionnel sur la base d'une valeur mesurée à chaque point d'une pluralité de points d'irradiation, les données de nuage de points tridimensionnel étant un morceau de données représentant une valeur de coordonnées tridimensionnelles de chacun de la pluralité de points d'irradiation, et la valeur mesurée étant obtenue en irradiant un objet environnant avec un laser à partir d'un scanner à laser monté sur un véhicule de mesurage et en mesurant un cap et une distance jusqu'à chacun de la pluralité de points d'irradiation ; et une unité de projection bidimensionnelle (230) pour effectuer un traitement de projection bidimensionnelle sur les données de nuages de points tridimensionnels sur la base d'une position de points d'observation et d'une direction d'observation, et générer une image de nuage de points, de sorte que l'image de nuage de points inclut une marque de position de mesure (312) représentant une position du véhicule de mesurage à l'instant de la mesure,
    **caractérisé par** une unité d'estimation de position (220) pour estimer une valeur de coordonnées tridimensionnelles d'une position estimée, qui est une position du véhicule de mesurage quand l'image de nuage de points est affichée, en utilisant des données de position de mesure représentant une valeur de coordonnées tridimensionnelles du véhicule de mesurage à l'instant de la mesure, et générer des données de position estimées représentant la valeur de coordonnées tridimensionnelles qui est estimée, dans lequel l'unité de projection bidimensionnelle (230) exécute le traitement de projection bidimensionnelle sur une marque de position estimée (313) représentant une position estimée en utilisant les données de positions estimées qui sont générées, et qui génère une image incluant un nuage de points tridimensionnels, la marque de position de mesure (312), et la marque de position estimée (313), à titre d'image de nuage de points.

2.  Générateur d'image de nuages de points (100) selon la revendication 1, dans lequel la direction d'observation est changée par une interface utilisateur (320), et l'unité de projection bidimensionnelle (230) exécute le traitement de projection bidimensionnelle sur la marque de position de mesure (312), dans un mode dans lequel la marque est vue depuis la direction d'observation.

3.  Générateur d'image de nuages de points (100) selon l'une quelconque des revendications 1 et 2, dans lequel un point tridimensionnel constituant le nuage de points tridimensionnel inclus dans l'image de nuage de points a une forme triangulaire.

4.  Générateur d'image de nuage de points (100) selon l'une quelconque des revendications 1 à 3, dans lequel l'unité de projection bidimensionnelle (230) détermine la position d'observation avec une position de mesure à titre de point de base, la position de mesure étant une position du véhicule de mesurage quand le scanner à laser exécute la mesure.

5.  Générateur d'image de nuage de points (100) selon l'une quelconque des revendications 1 à 3, dans lequel l'unité de projection bidimensionnelle (230) détermine la position d'observation avec une position estimée à titre de point de base, la position estimée étant une position du véhicule de mesurage quand l'image de nuage de points est affichée.

6.  Générateur d'image de nuage de. (100) selon l'une quelconque des revendications 1 à 3, dans lequel l'unité de projection bidimensionnelle (230) sélectionne, à titre de fonction de la vitesse du véhicule de mesurage, soit une position de mesure qui est une position du véhicule de mesurage quand le scanner à laser exécute la mesure soit la position estimée qui est la position du véhicule de mesurage quand l'image de nuage de points est affichée, et détermine la position d'observation avec la position étant sélectionnée à titre de point de base.

# Fig. 1

100:POINT CLOUD IMAGE GENERATOR

**110 MEASURING VEHICLE**

- 111 POSITIONING REINFORCEMENT SIGNAL RECEIVER — 101:POSITIONING REINFORCEMENT DATA
- 112 POSITIONING SIGNAL RECEIVER — 102:POSITIONING DATA
- 113 INERTIAL MEASUREMENT UNIT — 103:INERTIAL MEASUREMENT DATA
- 114 ODOMETER — 104:TRAVEL DISTANCE DATA
- 115 LASER SCANNER — 105: BEARING-DISTANCE DATA

**200 MEASURED DATA PROCESSING SECTION**

- 121 POSITION CALCULATION UNIT — 201:MEASUREMENT POSITION DATA
- 122 ATTITUDE CALCULATION UNIT — 202:MEASUREMENT ATTITUDE DATA
- 123 THREE-DIMENSIONAL POINT CLOUD GENERATING UNIT
- 203:THREE-DIMENSIONAL POINT CLOUD DATA
- 220 POSITION ESTIMATION UNIT
- 229: ESTIMATED POSITION DATA
- 230 TWO-DIMENSIONAL PROJECTION UNIT
- 235: PROJECTED POINT CLOUD DATA, 236: PROJECTED MARK DATA

- 300 DISPLAY
- 400 CONTROL UNIT — 204:CONTROL DATA

EP 3 299 763 B1

Fig. 2

112:POSITIONING SIGNAL RECEIVER

111 POSITIONING REINFORCEMENT SIGNAL RECEIVER

113:INERTIAL MEASUREMENT UNIT

119:TOP PANEL

114:ODOMETER

112

115

115:LASER SCANNER

110:MEASURING VEHICLE

Fig. 3

300:DISPLAY

310:POINT CLOUD IMAGE    320:INTERFACE IMAGE

0.6    -15.1    -1.7

0.11    0.00

EP 3 299 763 B1

# Fig. 4

411

VIEWPOINT POSITION

GAZE DIRECTION

Z

VEHICLE COORDINATE SYSTEM

U

ENU COORDINATE SYSTEM

N

401

Y

X

E

110

EP 3 299 763 B1

# Fig.5

310:POINT CLOUD IMAGE

313:ESTIMATED
    POSITION MARK

312:MEASUREMENT
    POSITION MARK

311:THREE-DIMENSIONAL POINT CLOUD

# Fig.6

320:INTERFACE IMAGE

321F

321D          321R

321L

321B

322X          322Y          322Z

X: 0.6 ▲▼    Y: -15.1 ▲▼    Z: -1.7 ▲▼

Pitch: 0.11 ▲▼    Yaw: 0.00 ▲▼    Clear

323P          323Y          329

# Fig.7

START POINT CLOUD IMAGE GENERATING METHOD

PERFORM MEASUREMENT BY MEASURING VEHICLE 110 — S110

CALCULATE POSITION OF MEASURING VEHICLE 110
AT THE TIME OF MEASUREMENT — S120

CALCULATE ATTITUDE OF MEASURING VEHICLE 110
AT THE TIME OF MEASUREMENT — S130

GENERATE THREE-DIMENSIONAL POINT CLOUD DATA 203 — S140

ESTIMATE POSITION OF MEASURING VEHICLE 110
AT THE TIME OF DISPLAY — S150

GENERATE PROJECTED POINT CLOUD DATA 235
AND PROJECTED MARK DATA 236 — S160

DISPLAY POINT CLOUD IMAGE 310 — S170

# Fig. 8

(F)                310

(L)       310        (D)        310        (R)        310

(B)        310

EP 3 299 763 B1

Fig. 9

# Fig. 10

(F)           310

(O)           310

(B)           310

Fig.11

# Fig.12

901 PROCESSOR

902 AUXILIARY STORAGE

100

910

903 MEMORY

904 COMMUNICATION UNIT

RECEIVER

TRANSMITTER

9041

9042

905 INPUT INTERFACE

911

907 INPUT UNIT

906 OUTPUT INTERFACE

912

908 OUTPUT UNIT

EP 3 299 763 B1

## Fig.13

1105 : LASER SCANNER

1103 : IMU

1102 : GNSS RECEIVER

1101 : POSITIONING REINFORCEMENT
SIGNAL RECEIVING UNIT

1110 : MEASURING VEHICLE

1104 : ODOMETRY UNIT

1102 : GNSS RECEIVER

# Fig.14

1206:POSITION-ATTITUDE MEASUREMENT UNIT 1200

1210:DISPLAY SYSTEM

1201

1100

MEASURED DATA PROCESSING SECTION

1205

MEASURING SECTION

1001

POSITIONING REINFORCEMENT SIGNAL RECEIVING UNIT

1101

SELF POSITION CALCULATION UNIT

1006, 1003

1007

SELF POSITION SETTING UNIT

1300

1002

1204

GNSS RECEIVER

1102

1003, 1006

ATTITUDE CALCULATION UNIT

1007

1009

LASER POINT CLOUD THREE-DIMENSIONAL RENDERING UNIT

TWO-DIMENSIONAL PROJECTION CONVERSION PROCESSING UNIT

DISPLAY

IMU

1103

1202

1013, 1014

1400

ODOMETRY UNIT

1004

1008

1203

1012

CONTROL UNIT

1104

1010

1011

LASER SCANNER

1005

POINT CLOUD RECOGNITION PROCESSING UNIT

1105

1250

MEASURING VEHICLE

1110

EP 3 299 763 B1

44

# Fig.15

1504:SELF POSITION MARK  1505:ESTIMATED SELF POSITION MARK

1506:PATH MARK

1502:FEATURE

1509:CONTOUR GRAPH

1501: THREE-DIMENSIONAL COORDINATE POINT CLOUD

1503:ROAD SURFACE

EP 3 299 763 B1

# Fig.16

Fig.17

Fig.18

# Fig. 19

(b)

(a)

(c)

Fig.20

# Fig.21

# Fig.22

(a)                                        (b)

# Fig.23

EXTRACT THREE NEIGHBORING POINTS — S1101

IS DISTANCE TO GRID SHORTER THAN OR EQUAL TO THRESHOLD? — S1102

IS DIFFERENCE AMONG NEIGHBORING POINTS SMALLER THAN OR EQUAL TO THRESHOLD? — S1103

DETERMINE HEIGHT BY USING THREE NEIGHBORING POINTS WEIGHTED AS A FUNCTION OF DISTANCE — S1104

SELECT HEIGHT OF ONE NEIGHBORING POINT — S1105

# Fig. 24

(1)

(2)

# Fig. 25

(1)

(2)

# Fig. 26

(A)

310:POINT CLOUD IMAGE

314:VIEWPOINT CONTROL MODE
SWITCHING BUTTON

Direction

313:ESTIMATED
POSITION MARK

312:MEASUREMENT
POSITION MARK

311: THREE-DIMENSIONAL POINT CLOUD

(B)

314

Direction

314

Position

(IN GAZE DIRECTION
ADJUSTMENT MODE)

(IN VIEWPOINT POSITION
ADJUSTMENT MODE)

# Fig.27

310:POINT CLOUD IMAGE    315I:INDICATOR    315:VERTICAL SLIDE

316:HORIZONTAL SLIDE    316I:INDICATOR

# Fig.28

310:POINT CLOUD IMAGE

317:VIEWPOINT POSITION MARK

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008099915 A
- JP 2015031018 A
- US 20150084755 A